# EUROPEAN PATENT APPLICATION

(11) **EP 4 383 904 A1**
(43) Date of publication of application: **12.06.2024**
(21) Application number: 21952442.8
(22) Date of filing: 06.08.2021
(51) Int. Cl.: H04W 72/12, H04W 52/36

(54) **METHOD AND APPARATUS FOR REPORTING POWER HEADROOM REPORT, USER EQUIPMENT, BASE STATION, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Steinbauer, Florian
(86) International application number: PCT/CN2021/111318
(87) International publication number: WO 2023/010569

(57) **Abstract**

The present application relates to the technical field of communications, and provides a method and apparatus for reporting a power headroom report (PHR), a user equipment (UE), a base station, and a storage medium. The method comprises: receiving configuration information sent by a base station, wherein the configuration information indicates that a UE supports, on one carrier, reporting of a PHR of a single transmission reception point (TRP); receiving power control parameters which support one or more TRPs, correspond to at least one carrier, and are sent by the base station; receiving a PHR reporting trigger condition corresponding to the one or more TRPs and sent by the base station; and triggering, on the basis of the power control parameters and the reporting trigger condition, PHR reporting of one TRP corresponding to each carrier. Embodiments of the present application provide a PHR reporting method applicable to a multi-TRP environment, and ensure effective allocation of network resources.

## Description

### TECHNICAL FIELD

The disclosure relates to the field of communication technologies, and in particular to a method and a device for reporting a power headroom report (PHR), a user equipment (UE), a base station, and a storage medium.

### BACKGROUND

In a communication system, a user equipment (UE) usually needs to report a Power Headroom Report (PHR) to meet network scheduling requirements. In the related art, the UE reports the PHR based on a power control parameter and a trigger condition for triggering to report the PHR.

However, when the UE is configured to support the multiple Transmission Reception Point (TRP) transmission, when the UE reports PHRs to the network, the network may not be able to know a relationship between the reported PHRs and different power control parameters, nor can it know a relationship between the TRPs and the PHRs, affecting uplink scheduling of the UE and resulting in ineffective allocation of network resources. Therefore, there is an urgent need for a method for reporting the PHR suitable for the Multi-TRP scenario.

### SUMMARY

Embodiments of the disclosure provide a method and a device for reporting a PHR, a UE, a base station, a core network device and a storage medium, providing a method for reporting the PHR suitable for a Multi-TRP scenario.

In one aspect, embodiments of the disclosure provide a method for reporting a PHR, performed by a UE. The method includes:
receiving configuration information sent by a base station, in which the configuration information is configured to instruct the UE to support, on one carrier, a PHR reporting for one single TRP;
receiving, from the base station, power control parameters corresponding to at least one carrier that support one or more TRPs;
receiving, from the base station, a PHR reporting trigger condition corresponding to the one or more TRPs; and
triggering the PHR reporting for a respective TRP corresponding to each carrier based on the power control parameters and the reporting trigger condition.

In another aspect, embodiments of the disclosure provide a method for reporting a PHR, performed by a base station. The method includes:
sending configuration information to a UE, in which the configuration information is configured to instruct the UE to support, on one carrier, a PHR reporting for one single TRP;
sending power control parameters corresponding to at least one carrier that support one or more TRPs to the UE;
sending a PHR reporting trigger condition corresponding to the one or more TRPs to the UE; and
receiving, from the UE, the PHR reporting of a respective TRP corresponding to each carrier.

In yet another aspect, embodiments of the disclosure provide a device for reporting a PHR. The device includes:
a receiving module, configured to receive configuration information sent by the base station, in which the configuration information is configured to instruct a UE to support, on one carrier, a PHR reporting for one single TRP;
in which the receiving module is further configured to receive, from the base station, power control parameters corresponding to at least one carrier that support one or more TRPs;
in which the receiving module is further configured to receive, from the base station, a PHR reporting trigger condition corresponding to the one or more TRPs; and
in which the device further includes a reporting module, configured to trigger the PHR reporting for a respective TRP corresponding to each carrier based on the power control parameters and the reporting trigger condition.
In yet another aspect, embodiments of the disclosure provide a device for reporting a PHR, performed by a base station. The device includes:
a sending module, configured to send configuration information to a UE, in which the configuration information is configured to instruct the UE to support, on one carrier, a PHR reporting for one single TRP;
in which the sending module is further configured to send power control parameters corresponding to at least one carrier that support one or more TRPs to the UE;
in which the sending module is further configured to send a PHR reporting trigger condition corresponding to the one or more TRPs to the UE; and
in which the device includes a receiving module configured to receive, from the UE, the PHR reporting of a respective TRP corresponding to each carrier.

In yet another aspect, embodiments of the disclosure provide a UE. The UE includes a transceiver; a memory; and a processor. The processor is connected to the transceiver and the memory and configured to control transmission and reception of a wireless signal and perform the methods according to embodiments of the above aspects, by executing computer-executable instructions stored on the memory.

In yet another aspect, embodiments of the disclosure provide a base station. The base station includes: a transceiver; a memory; and a processor. The processor is connected to the transceiver and the memory and configured to control transmission and reception of a wireless signal and perform the methods according to embodiments of the above aspects, by executing computer-executable instructions stored on the memory.

In yet another aspect, embodiments of the disclosure provide a computer storage medium. The computer storage medium has computer-executable instructions stored thereon. After the computer-executable instructions are executed by a processor, the methods as described above are performed.

In conclusion, in the methods and devices for reporting a PHR, a UE and a storage medium according to embodiments of the disclosure, the UE will receive, from the base station, the power control parameter(s) of the one or more TRPs corresponding to at least one carrier and the reporting trigger condition corresponding to the one or more TRPs. Afterwards, the base station triggers the PHR reporting for a respective TRP corresponding to each carrier based on the power control parameter(s) and the reporting trigger condition. In this way, embodiments of the disclosure provide methods for reporting a PHR suitable for a multi-TRP scenario. In addition, in the methods according to embodiments of the disclosure, not only a respective power control parameter corresponding to each carrier is involved, but also a respective power control parameter corresponding to each TRP on each carrier is involved; and not only a reporting trigger condition based on power control parameter(s) corresponding to the carrier(s) is involved, but also a reporting trigger condition based on power control parameter(s) corresponding to the TRP(s) on the carrier(s) is involved, thereby enhancing the configuration of the power control parameter and the reporting trigger condition.

Moreover, in embodiments of the disclosure, in reporting the PHR(s), one TRP will be selected for each carrier to report the respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

Additional aspects and advantages of the disclosure will be set forth in part in the following description and will be obvious in part from the description, or may be learned by practice of the disclosure.

### BRIEF DESCRIPTION OF THE DRAWINGS

Above and/or additional aspects and advantages of the disclosure will become apparent and understandable from the following description of embodiments in conjunction with the accompanying drawings.
FIG. 1 is a flowchart illustrating a method for reporting a PHR according to an embodiment of the disclosure.
FIG. 2 is a flowchart illustrating a method for reporting a PHR according to another embodiment of the disclosure.
FIG. 3A is a flowchart illustrating a method for reporting a PHR according to still another embodiment of the disclosure.
FIG. 3B is a schematic diagram illustrating a reporting format of a PHR medium access control control element (MAC-CE) under single-TRP transmission according to embodiments of the disclosure.
FIG. 3C is a schematic diagram illustrating a reporting format of a PHR MAC-CE under multi-TRP transmission when the number of cells is less than or equal to 8 according to embodiments of the disclosure.
FIG. 3D is a schematic diagram illustrating a reporting format of PHR MAC-CE under multi-TRP transmission when the number of cells is greater than 8 according to embodiments of the disclosure.
FIG. 4A is a flowchart illustrating a method for reporting a PHR according to yet another embodiment of the disclosure.
FIG. 4B is a schematic diagram illustrating another reporting format of PHR MAC-CE under single-TRP transmission according to embodiments of the disclosure.
FIG. 4C is a schematic diagram illustrating another reporting format of a PHR MAC-CE under multi-TRP transmission when the number of cells is less than or equal to 8 according to embodiments of the disclosure.
FIG. 4D is a schematic diagram illustrating a reporting format of a PHR MAC-CE under multi-TRP transmission when the number of cells is less than or equal to 8 according to embodiments of the disclosure.
FIG. 5 is a flowchart illustrating a method for reporting a PHR according to yet another embodiment of the disclosure.
FIG. 6 is a flowchart illustrating a method for reporting a PHR according to yet another embodiment of the disclosure.
FIG. 7 is a flowchart illustrating a method for reporting a PHR according to yet another embodiment of the disclosure.
FIG. 8 is a flowchart illustrating a method for reporting a PHR according to yet another embodiment of the disclosure.
FIG. 9 is a schematic diagram illustrating a device for reporting a PHR according to yet another embodiment of the disclosure.
FIG. 10 is a schematic diagram illustrating a device for reporting a PHR according to another embodiment of the disclosure.
FIG. 11 is a block diagram illustrating a UE according to an embodiment of the disclosure.
FIG. 12 is a block diagram illustrating a base station according to an embodiment of the disclosure.

### DETAILED DESCRIPTION

Reference will now be made in detail to embodiments, examples of which are illustrated in the accompanying drawings. When the following description refers to the accompanying drawings, the same numerals in different drawings refer to the same or similar elements unless otherwise indicated. The implementations described in the following embodiments do not represent all implementations consistent with embodiments of the disclosure. Rather, they are merely examples of apparatuses and methods consistent with aspects of embodiments as recited in the appended claims.

Terms used in embodiments of the disclosure are for the purpose of describing specific embodiments only, and are not intended to limit embodiments of the disclosure. As used in the examples of this disclosure and the appended claims, the singular forms "a" and "the" are also intended to include the plural unless the context clearly dictates otherwise. It is understandable that the term "and/or" as used herein refers to and includes any and all possible combinations of one or more of the associated listed items.

It is understandable that although embodiments of the disclosure may use the terms first, second, third, etc. to describe various information, the information should not be limited to these terms. These terms are only used to distinguish information of the same type from one another. For example, without departing from the scope of embodiments of the disclosure, first information may also be called second information, and similarly, second information may also be called first information. Depending on the context, the word "if" as used herein may be interpreted as "while," "when" or "in response to determining."

Embodiments of the disclosure are described in detail below, examples of which are illustrated in the accompanying drawings, wherein like or similar reference numerals designate like or similar elements throughout. Embodiments described below by referring to the figures are examples, intended to explain the disclosure and should not be construed as limiting the disclosure.

In methods and devices for reporting a power headroom report (PHR), a user equipment (UE) and a storage medium according to embodiments of the disclosure, the UE will receive, from a base station, power control parameter(s) of one or more transmission reception points (TRPs) corresponding to at least one carrier and a reporting trigger condition corresponding to the one or more TRPs. Afterwards, the base station triggers a PHR reporting for a respective TRP corresponding to each carrier based on the power control parameter(s) and the reporting trigger condition. In this way, embodiments of the disclosure provide methods for reporting a PHR suitable for a multi-TRP scenario. In addition, in the methods according to embodiments of the disclosure, not only a respective power control parameter corresponding to each carrier is involved, but also a respective power control parameter corresponding to each TRP on each carrier is involved; and not only a reporting trigger condition based on power control parameter(s) corresponding to the carrier(s) is involved, but also a reporting trigger condition based on the power control parameter(s) corresponding to the TRP(s) on the carrier(s) is involved, thereby enhancing the configuration of the power control parameter and the reporting trigger condition.

Moreover, in embodiments of the disclosure, in reporting the PHR(s), one TRP will be selected for each carrier to report its respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

The methods and the devices for reporting a PHR, the UE, the base station, a core network device, and the storage medium according to the disclosure will be described in detail below with reference to the accompanying drawings.

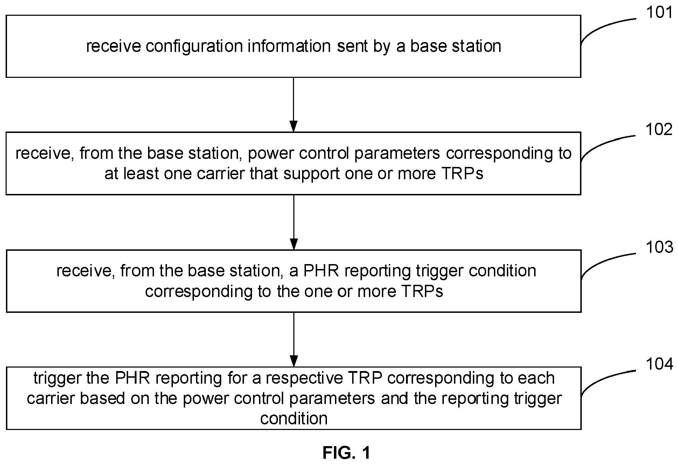

FIG. 1 is a flowchart illustrating a method for reporting a PHR according to an embodiment of the disclosure. The method is performed by a UE. As illustrated in FIG. 1, the method for reporting a PHR may include the following.

At block 101, configuration information sent by a base station is received.

It is noteworthy that the method according to embodiments of the disclosure may be performed by any UE. The UE may be a device that provides voice and/or data connectivity to a user. The UE may communicate with one or more core networks via a radio access network (RAN). The UE may be an Internet of Things (IoT) terminal, such as a sensor device and a mobile phone (or called a "cellular" phone), or the UE may be a computer having an IoT terminal, such as a fixed, portable, pocket, hand-held, computer-built-in or vehicle-mounted device. For example, the UE may be station (STA), subscriber unit, subscriber station, mobile station, mobile, remote station, access point, remote terminal, access terminal, user terminal, or user agent. Or, the UE may be a device of an unmanned aerial vehicle. Or, the UE may be a vehicle-mounted device, such as a trip computer with a wireless communication function or a wireless terminal connected externally to the trip computer. Or, the UE may be a roadside device, such as a street lamp, a signal lamp, or other roadside devices with a wireless communication function.

In an embodiment of the disclosure, methods according to embodiments of the disclosure may be adapted to a Multi-TRP scenario.

In an embodiment of the disclosure, the above-mentioned "configuration information" may be used for instructing the UE to support, on one carrier, the PHR reporting for one single TRP.

It may be known from this that the methods according to embodiments of the disclosure are performed by a UE that supports single-TRP reporting on one carrier in the Multi-TRP scenario.

At block 102, one or more power control parameters corresponding to at least one carrier that support one or more TRPs are received from the base station.

In an embodiment of the disclosure, each TRP may correspond to a respective power control parameter, and power control parameters corresponding to different TRPs are different.

In one embodiment of the disclosure, in the multi-TRP scenario, processes of sending the one or more power control parameters of the one or more TRPs by the base station through the one or more TRPs are independent from each other, thereby enhancing independence between TRPs and enabling better scheduling of resources in the multi-TRP scenario.

Further, in an embodiment of the disclosure, each power control parameter may include at least one of:
first information corresponding to a TRP on a carrier; or
second information corresponding to a carrier.

In an embodiment of the disclosure, identifier information corresponding to the TRP on the carrier in the above first information may include at least one of:
identifier information corresponding to the TRP on the carrier;
identifier information of a downlink path loss reference carrier corresponding to the TRP on the carrier;
a downlink path loss change value corresponding to the TRP on the carrier;
an uplink power back-off change value corresponding to the TRP on the carrier;
a PHR-periodic timer corresponding to the TRP on the carrier;
a PHR-prohibit timer corresponding to the TRP on the carrier;
a maximum permissible exposure (MPE) power threshold corresponding to the TRP on the carrier;
an MPE-prohibit timer corresponding to the TRP on the carrier;
an uplink MPE power back-off change value corresponding to the TRP on the carrier; or
an MPE frequency range 2 (FR2) (millimeter wave) corresponding to the TRP on the carrier.

It is noteworthy that, in an embodiment of the disclosure, the first information corresponding to the TRP on the carrier may include any one of the foregoing. In another embodiment of the disclosure, the first information corresponding to the TRP on the carrier may include any combination of the foregoing.

In an embodiment of the disclosure, the identifier information corresponding to the TRP on the carrier in the first information may include at least one of:
an identifier of an uplink physical channel of the TRP on the carrier;
a beam information identifier of the TRP on the carrier;
a sounding reference signal (SRS) resource set identifier of the TRP on the carrier; or
a power control parameter set identifier of the TRP on the carrier.

In an embodiment of the disclosure, the above-mentioned "uplink physical channel" may include at least one of:
a physical uplink control channel (PUSCH);
a physical uplink shared channel (PUSCH);
an SRS; or
a physical random access channel (PRACH).

In an embodiment of the disclosure, the above-mentioned "second information corresponding to a carrier" may include at least one of:
identifier information of a downlink path loss reference carrier corresponding to the carrier;
a downlink path loss change value corresponding to the carrier;
an uplink power back-off change value corresponding to the carrier;
a PHR-periodic timer corresponding to the carrier;
a PHR-prohibit timer corresponding to the carrier;
an MPE power threshold corresponding to the carrier;
an MPE-prohibit timer corresponding to the carrier;
an uplink MPE power back-off change value corresponding to the carrier; or
an MPE FR2 reporting corresponding to the carrier.

It is noteworthy that, in an embodiment of the disclosure, the second information corresponding to the carrier may include any one of the foregoing. In another embodiment of the disclosure, the second information corresponding to the carrier may include any combination of the foregoing.

At block 103, a PHR reporting trigger condition corresponding to the one or more TRPs is received from the base station.

In an embodiment of the disclosure, the reporting trigger condition may include at least one of:
a change in identifier information corresponding to a TRP on a carrier;
a change in a downlink path loss reference carrier corresponding to a TRP on a carrier;
a change in a sending carrier of an uplink physical channel of a TRP on a carrier;
a PHR-periodic timer corresponding to a TRP on a carrier expiring;
a PHR-prohibit timer corresponding to a TRP on a carrier expiring and an actual downlink path loss change value corresponding to the TRP exceeding a downlink path loss change value corresponding to the TRP on the carrier included in the power control parameter;
a PHR-prohibit timer corresponding to a TRP on a carrier expiring and an actual uplink power back-off change value corresponding to the TRP exceeding an uplink power back-off change value of the TRP on the carrier included in the power control parameter;
a PHR-prohibit timer corresponding to a TRP on a carrier expiring and an actual downlink path loss change value corresponding to the TRP exceeding a downlink path loss change value corresponding to the carrier included in the power control parameter;
a PHR-prohibit timer corresponding to a TRP on a carrier expiring and an actual uplink power back-off change value corresponding to the TRP exceeding an uplink power back-off change value corresponding to the carrier included in the power control parameter;
a PHR-periodic timer corresponding to a carrier expiring;
a PHR-prohibit timer corresponding to a carrier expiring and an actual downlink path loss change value corresponding to a TRP exceeding a downlink path loss change value corresponding to the TRP on the carrier included in the power control parameter;
a PHR-prohibit timer corresponding to a carrier expiring and an actual uplink power back-off change value corresponding to a TRP exceeding an uplink power back-off change value corresponding to the TRP on the carrier included in the power control parameter;
a PHR-prohibit timer corresponding to a carrier expiring and an actual downlink path loss change value corresponding to a TRP exceeding a downlink path loss change value corresponding to the carrier included in the power control parameter;
a PHR-prohibit timer corresponding to a carrier expiring and an actual uplink power back-off change value corresponding to a TRP exceeding an uplink power back-off change value corresponding to the carrier included in the power control parameter;
a change in a downlink path loss reference carrier corresponding to a carrier;
configuring a MPE FR2 reporting corresponding to a TRP on a carrier, and the MPE power back-off change value corresponding to the TRP exceeding an MPE power threshold corresponding to the TRP on the carrier included in the power control parameter;
configuring an MPE FR2 reporting corresponding to a TRP on a carrier, and an MPE power back-off change value corresponding to the TRP exceeding an uplink MPE power back-off change value corresponding to the TRP on the carrier included in the power control parameter;
configuring an MPE FR2 reporting corresponding to a TRP on a carrier, and an MPE power back-off change value corresponding to the TRP exceeding an MPE power threshold corresponding to the carrier included in the power control parameter;
configuring an MPE FR2 reporting corresponding to a TRP on a carrier, and an MPE power back-off change value corresponding to the TRP exceeding an uplink MPE power back-off change value corresponding to the carrier included in the power control parameter;
configuring an MPE FR2 reporting corresponding to a carrier and an MPE power back-off change value corresponding to a TRP exceeding an MPE power threshold corresponding to the TRP on the carrier included in the power control parameter;
configuring an MPE FR2 reporting corresponding to a carrier and an MPE power back-off change value corresponding to a TRP exceeding an uplink MPE power back-off change value corresponding to the TRP on the carrier included in the power control parameter;
configuring an MPE FR2 reporting corresponding to a carrier, and an MPE power back-off change value corresponding to a TRP exceeding an MPE power threshold corresponding to the carrier included in the power control parameter;
configuring an MPE FR2 reporting corresponding to a carrier, and an MPE power back-off change value corresponding to a TRP exceeding an uplink MPE power back-off change value corresponding to the carrier included in the power control parameter;
an MPE-prohibit timer corresponding to a TRP on a carrier expiring; or
an MPE-prohibit timer corresponding to a carrier expiring.

It is noteworthy that, in an embodiment of the disclosure, the reporting trigger condition may include any one of the foregoing. In another embodiment of the disclosure, the reporting trigger condition may include any combination of the foregoing.

In block 104, the PHR reporting is triggered for a respective TRP corresponding to each carrier based on the one or more power control parameters and the reporting trigger condition.

In one embodiment of the disclosure, when it is determined, based on the power control parameter(s) and the reporting trigger condition, that the UE satisfies the reporting triggering condition, the UE may report the PHR of the respective TRP on each carrier to the base station. The method for the UE to report the PHR of the respective TRP on each carrier to the base station will be introduced in the following.

In conclusion, in the method for reporting a PHR according to embodiments of the disclosure, the UE will receive, from the base station, the one or more power control parameters of the one or more TRPs corresponding to at least one carrier and the reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide a method for reporting a PHR suitable for a multi-TRP scenario. In addition, in the method according to embodiments of the disclosure, not only a respective power control parameter corresponding to each carrier is involved, but also a respective power control parameter corresponding to each TRP on each carrier is involved; and not only a reporting trigger condition based on one or more power control parameters corresponding to at least one carrier is involved, but also a reporting trigger condition based on one or more power control parameter corresponding to one or more TRP on at least one carrier is involved, thereby enhancing the configuration of the power control parameter and the reporting trigger condition.

Moreover, in embodiments of the disclosure, in reporting the PHR(s), one TRP will be selected for each carrier to report the respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

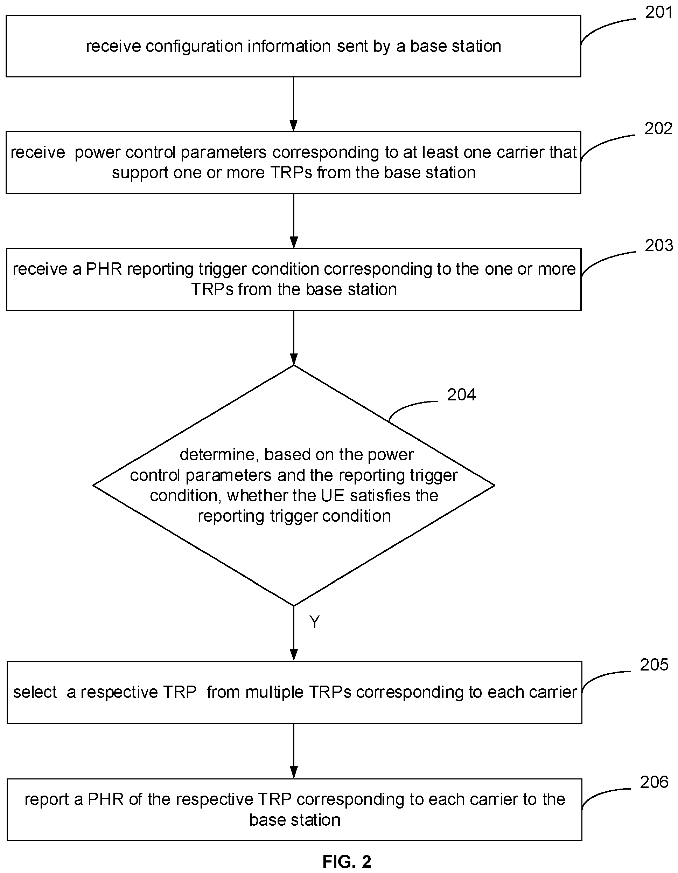

FIG. 2 is a flowchart illustrating a method for reporting a PHR according to an embodiment of the disclosure. The method is performed by a UE. As illustrated in FIG. 2, the method for reporting a PHR may include the following.

At block 201, configuration information sent by a base station is received.

At block 202, one or more power control parameters corresponding to at least one carrier that support one or more TRPs are received from the base station.

At block 203, a PHR reporting trigger condition corresponding to the one or more TRPs is received from the base station.

For relevant introductions about blocks 201 to 203, reference may be made to the foregoing embodiments, and details are not described in this embodiment of the disclosure.

At block 204, it is determined, based on the one or more power control parameters and the reporting trigger condition, whether the UE satisfies the reporting trigger condition; and the method proceeds to perform a block 205 when the UE satisfies the reporting trigger condition.

In one embodiment of the disclosure, when the UE satisfies the reporting trigger condition, it means that the PHR needs to be reported to the base station at present, and the block 205 is performed.

At block 205, for each carrier, a TRP is selected from multiple TRPs corresponding to the carrier.

In an embodiment of the disclosure, the method for the UE to select one TRP from multiple TRPs corresponding to the carrier may include at least one of:
Method 1: selecting the TRP on the carrier based on a predefined selection rule;
Method 2: selecting the TRP on the carrier based on a selection rule configured/indicated by a network; or
Method 3: autonomously selecting the TRP on the carrier.

In an embodiment of the disclosure, the selection rule in the Method 1 and the Method 2 may include:
Rule 1: selecting a TRP corresponding to a predefined transmission opportunity on the carrier as the one TPR; or
Rule 2: determining a TRP on the carrier as the one TRP by default.

It is noteworthy that, in an embodiment of the disclosure, the predefined transmission opportunity in the Rule 1 may be, for example, the first transmission opportunity on the carrier. And, in an embodiment of the disclosure, determining a TRP on the carrier as the one TRP by default in Rule 2 may be, for example, defaulting the TRP with a smallest or largest serial number corresponding to the carrier as the TRP.

Further, in an embodiment of the disclosure, autonomously selecting the TRP on the carrier by the UE in the Method 3 may include: determining a TRP with a worst actual power control parameter on the carrier as the one TRP of which the PHR is to be reported.

At block 206, for each carrier, a PHR of the TRP corresponding to the carrier is reported to the base station.

In an embodiment of the disclosure, reporting content of the PHR of the TRP reported by the UE to the base station may include a relevant power parameter. The relevant power parameter may include at least one of:
reporting a maximum power that can be sent by one TRP on the carrier after a power back-off, in response to the carrier being configured with the power back-off;
reporting a power headroom of one TRP after a real PUSCH is sent, in response to the carrier being configured with a PUSCH and there is a real PUSCH transmission at the UE;
reporting a power headroom of one TRP after a reference PUSCH is sent (the PHR after the reference PUSCH is sent will be explained later), in response to the carrier being configured with a PUSCH and there is a real PUSCH transmission at the UE;
reporting a power headroom of one TRP after a reference PUSCH is sent, in response to the carrier being configured with a PUSCH and there is no real PUSCH transmission at the UE;
reporting a power headroom of one TRP after a real PUCCH is sent, in response to the carrier being configured with a PUCCH and there is a real PUCCH transmission at the UE;
reporting a power headroom of one TRP after a reference PUCCH is sent, in response to the carrier being configured with a PUCCH and there is a real PUCCH transmission at the UE;
reporting a power headroom of one TRP after a reference PUCCH is sent, in response to the carrier being configured with a PUCCH and there is no real PUCCH transmission at the UE;
reporting a power headroom of one TRP after a real SRS is sent, in response to the carrier being configured with an SRS and there is a real SRS transmission at the UE;
reporting a power headroom of one TRP after a reference SRS is sent, in response to the carrier being configured with an SRS and there is a real SRS transmission at the UE;
reporting a power headroom of one TRP after a reference SRS is sent, in response to the carrier being configured with an SRS and there is no real SRS transmission at the UE;
reporting a power headroom of one TRP after a real PRACH is sent, in response to the carrier being configured with a PRACH and there is a real PRACH transmission at the UE;
reporting a power headroom of one TRP after a reference PRACH is sent, in response to the carrier being configured with a PRACH and there is a real PRACH transmission at the UE;
reporting a power headroom of one TRP after a reference PRACH is sent, in response to the carrier being configured with a PRACH and there is no real PRACH transmission at the UE; or
reporting a power back-off value of the UE.

It is noteworthy that, in an embodiment of the disclosure, the reporting content may include any of the foregoing. In another embodiment of the disclosure, the reporting content may include any combination of the foregoing.

Below, the "PUSCH" is taken as an example ("PUCCH," "SRS," and "PRACH" are similar) to describe the above-mentioned "real PUSCH is sent" and "reference PUSCH is sent".

In one embodiment of the disclosure, "the power headroom after the actual PUSCH is sent" means the power headroom of the PUSCH after the actual sending on the PUSCH.

In one embodiment of the disclosure, "the power headroom after the reference PUSCH is sent" means that: when there is no actual transmission on the PUSCH, but the power headroom of the PUSCH needs to be reported, at this time, the UE may determine a reference PUSCH base on an indication from of the network, calculate the power headroom of the PUSCH or other channels that need to report PHR using the transmission format and transmission parameters corresponding to the reference PUSCH, and use the calculated power headroom as the power headroom of the PUSCH that needs to report the PHR.

Further, it is noteworthy that, in an embodiment of the disclosure, on the basis that the reporting content of the PHR includes the above-mentioned relevant power parameter, the UE may also add an identifier of the TRP in the reporting content of the PHR.

That is, in an embodiment of the disclosure, when the UE reports the PHR, the reporting content may include: the relevant power parameter. In another embodiment of the disclosure, when the UE reports the PHR, the reporting content may include: the relevant power parameter + the identifier of the TRP.

In conclusion, in the method for reporting a PHR according to embodiments of the disclosure, the UE will receive, from the base station, the one or more power control parameters of the one or more TRPs corresponding to at least one carrier and the reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide a method for reporting a PHR suitable for a multi-TRP scenario. In addition, in the method according to embodiments of the disclosure, not only a respective power control parameter corresponding to each carrier is involved, but also a respective power control parameter corresponding to each TRP on each carrier is involved; and not only a reporting trigger condition based on one or more power control parameters corresponding to at least one carrier is involved, but also a reporting trigger condition based on one or more power control parameter corresponding to one or more TRP on at least one carrier is involved, thereby enhancing the configuration of the power control parameter and the reporting trigger condition.

Moreover, in embodiments of the disclosure, in reporting the PHR(s), one TRP will be selected for each carrier to report the respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

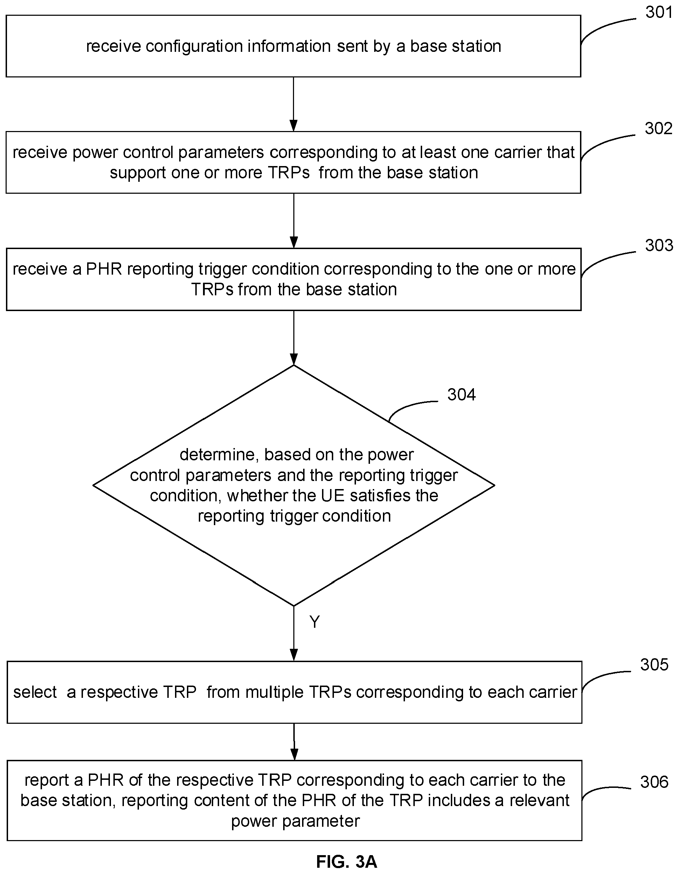

FIG. 3A is a flowchart illustrating a method for reporting a PHR according to an embodiment of the disclosure. The method is performed by a UE. As illustrated in FIG. 3A, the method for reporting a PHR may include the following.

At block 301, configuration information sent by a base station is received.

At block 302, one or more power control parameters corresponding to at least one carrier that support one or more TRPs are received from the base station.

At block 303, a PHR reporting trigger condition corresponding to the one or more TRPs is received from the base station.

At block 304, it is determined whether the UE satisfies the reporting trigger condition based on the one or more power control parameters and the reporting trigger condition, and a block 305 is performed when the UE satisfies the reporting trigger condition.

In one embodiment of the disclosure, when the UE satisfies the reporting trigger condition, it means that the PHR needs to be reported to the base station at present, and the block 305 may be performed.

At block 305, for each carrier, a TRP is selected from multiple TRPs corresponding to the carrier.

For relevant introductions about blocks 301 to 305, reference may be made to the foregoing embodiments, and details are not described in this embodiment of the disclosure.

At bock 306, for each carrier, a PHR of the TRP corresponding to the carrier is reported to the base station, in which a reporting content of the PHR of the TRP includes a relevant power parameter.

In an embodiment of the disclosure, the relevant power parameter may include at least one of:
reporting a maximum power that can be sent by one TRP on the carrier after a power back-off in response to the carrier being configured with the power back-off;
reporting a power headroom of one TRP after a real PUSCH is sent, in response to the carrier being configured with a PUSCH and there is a real PUSCH transmission at the UE;
reporting a power headroom of one TRP after a reference PUSCH is sent, in response to the carrier being configured with a PUSCH and there is a real PUSCH transmission at the UE;
reporting a power headroom of one TRP after a reference PUSCH is sent, in response to the carrier being configured with a PUSCH and there is no real PUSCH transmission at the UE;
reporting a power headroom of one TRP after a real PUCCH is sent, in response to the carrier being configured with a PUCCH and there is a real PUCCH transmission at the UE;
reporting a power headroom of one TRP after a reference PUCCH is sent, in response to the carrier being configured with a PUCCH and there is a real PUCCH transmission at the UE;
reporting a power headroom of one TRP after a reference PUCCH is sent, in response to the carrier being configured with a PUCCH and there is no real PUCCH transmission at the UE;
reporting a power headroom of one TRP after a real SRS is sent, in response to the carrier being configured with an SRS and there is a real SRS transmission at the UE;
reporting a power headroom of one TRP after a reference SRS is sent, in response to the carrier being configured with an SRS and there is a real SRS transmission at the UE;
reporting a power headroom of one TRP after a reference SRS is sent, in response to the carrier being configured with an SRS and there is no real SRS transmission at the UE;
reporting a power headroom of one TRP after a real PRACH is sent, in response to the carrier being configured with a PRACH and there is a real PRACH transmission at the UE;
reporting a power headroom of one TRP after a reference PRACH is sent, in response to the carrier being configured with a PRACH and there is a real PRACH transmission at the UE;
reporting a power headroom of one TRP after a reference PRACH is sent, in response to the carrier being configured with a PRACH and there is no real PRACH transmission at the UE; or
reporting a power back-off value of the UE.

It is noteworthy that, in an embodiment of the disclosure, the reporting content may include any of the foregoing. In another embodiment of the disclosure, the reporting content may include any combination of the foregoing.

Further, it is noteworthy that, in an embodiment of the disclosure, the UE may report the PHR of the TRP through Media Access Control Address Control Element (MAC-CE) signaling.

The following is an example of the reporting format of the PHR MAC-CE when the reporting content of the PHR of the TRP includes the relevant power parameter.

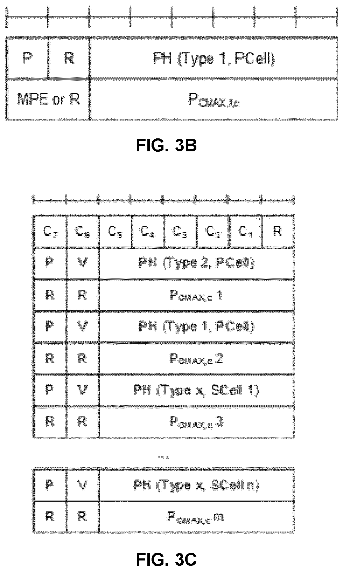

FIG. 3B is a schematic diagram illustrating a reporting format of the PHR MAC-CE under single-TRP transmission according to embodiments of the disclosure. As illustrated in FIG. 3B, the reporting format of the PHR MAC-CE PHR under the single-TRP includes fields "P," "PH," "MPE," and "P_{CMAC,f,c}".

FIG. 3C is a schematic diagram illustrating a reporting format of a PHR MAC-CE under multi-TRP transmission when the number of cells is less than or equal to 8 according to an embodiment of the disclosure. As illustrated in FIG. 3C, the reporting format of the PHR MAC-CE under the multi-TRP includes fields "P," "PH," "MPE," "P_{CMAC,f,ci}," "V," and "Cᵢ".

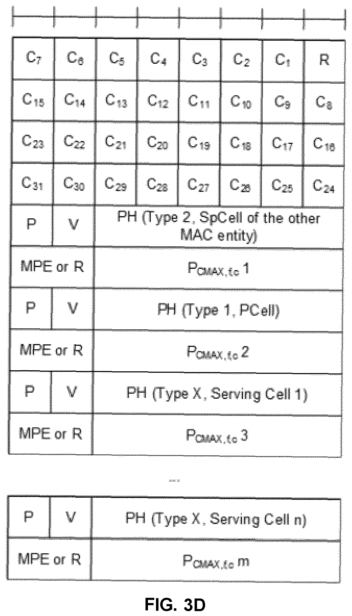

FIG. 3D is a schematic diagram illustrating a reporting format of a PHR MAC-CE under multi-TRP transmission when the number of cells is greater than 8 according to an embodiment of the disclosure. As illustrated in FIG. 3D, the reporting format of the PHR MAC-CE under the multi-TRP includes fields "P," "PH," "MPE," "P_{CMAC,f,ci}," "V," and "Ci".

The meanings of these fields are as follows:
Ci: This field indicates whether a PH field for the SCell with SCelllndex i is reported when one SCell is configured with SCelllndex through an RRC message. A value "1" of the Ci field indicates a PH field reported for the SCell configured with the SCelllndex i, while a value "0" of the Ci field indicates no PH field reported for the SCell configured with the SCelllndex i.
R: Reserved bit, set to "0".
V: This field indicates whether the reported PH value is based on a real transmission or a reference format. For Type 1 PH, V = 0 indicates the actual transmission on PUSCH, and V = 1 indicates the use of the reference format of the PUSCH. For Type 2 PH, V = 0 indicates the actual transmission on PUCCH, and V = 1 indicates the use of the reference format of PUCCH. For Type 3 PH, V = 0 indicates the actual transmission on SRS, and V = 1 indicates the use of the reference format of SRS. In addition, for the Type 1, Type 2 and Type 3 PH, V = 0 indicates that the P_{CMAX, c} field corresponding to a certain cell is included in the reporting format, and V = 1 indicates that the P_{CMAX, c} field corresponding to a certain cell is not included in the reporting format.
PH: This field indicates the power headroom level.
P: This field indicates whether the current MAC applies the power back-off mechanism. When there is no power back-off, the MAC entity sets P=1 when the P_{CMAX, c} field corresponding to a cell has a different value.
MPE: This field indicates the maximum permissible exposure.
And, the types of PH include:
Type 1 PH: PH_{type1,c(i)} = P_{CMAX,c}-P_{PUSCH,c(i)};
Type 2 PH: PH_{type2,c(i)} = P_{CMAX,c}-P_{PUSCH,c(i)}-P_{PUCCH,c(i)}; and
Type 3 PH: PH_{type3,c(i)} = P_{CMAX,c}-P_{SRS,c(i)};
In which, "i" is a certain subframe "i",
P_{PUSCH,c(i)} is the transmit power of an uplink data channel (PUSCH) obtained by the UE based on the calculation. When the UE has an actual signal to send, its value is determined based on the channel power actually sent. When the UE has no actual signal transmission, its value is determined based on a reference (or virtual) channel power.
P_{PUCCH,c(i)} is the transmit power of the uplink control channel (PUCCH) obtained by the UE based on the calculation. When the UE has an actual signal to send, its value is determined based on the channel power actually sent. When the UE has no actual signal transmission, its value is determined based on a reference (or virtual) channel power.
P_{SRS,c(i)} is the transmit power of the uplink sounding reference channel (SRS) obtained by the UE based on the calculation. When the UE has an actual signal to send, its value is determined based on the actual sent channel power. When the UE has no actual signal transmission, its value is determined based on a reference (or virtual) channel power
P_{CMAX,c}: If present, this field indicates the value of P_{CMAX,c} used for calculating the corresponding PH field, i.e., the maximum transmittable power calculated by the UE in this cell.

In conclusion, in methods for reporting a PHR according to embodiments of the disclosure, the UE will receive, from the base station, the one or more power control parameters of the one or more TRPs corresponding to at least one carrier and the PHR reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide methods for reporting a PHR suitable for a multi-TRP scenario. In addition, in the methods according to embodiments of the disclosure, not only a respective power control parameter corresponding to each carrier is involved, but also a respective power control parameter corresponding to each TRP on each carrier is involved; and not only a reporting trigger condition based on the power control parameter corresponding to the carrier is involved, but also a reporting trigger condition based on the power control parameter corresponding to the TRP on the carrier is involved, thereby enhancing the configuration of the power control parameter and the reporting trigger condition.

Moreover, in embodiments of the disclosure, in reporting the PHR, one TRP will be selected for each carrier to report its respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

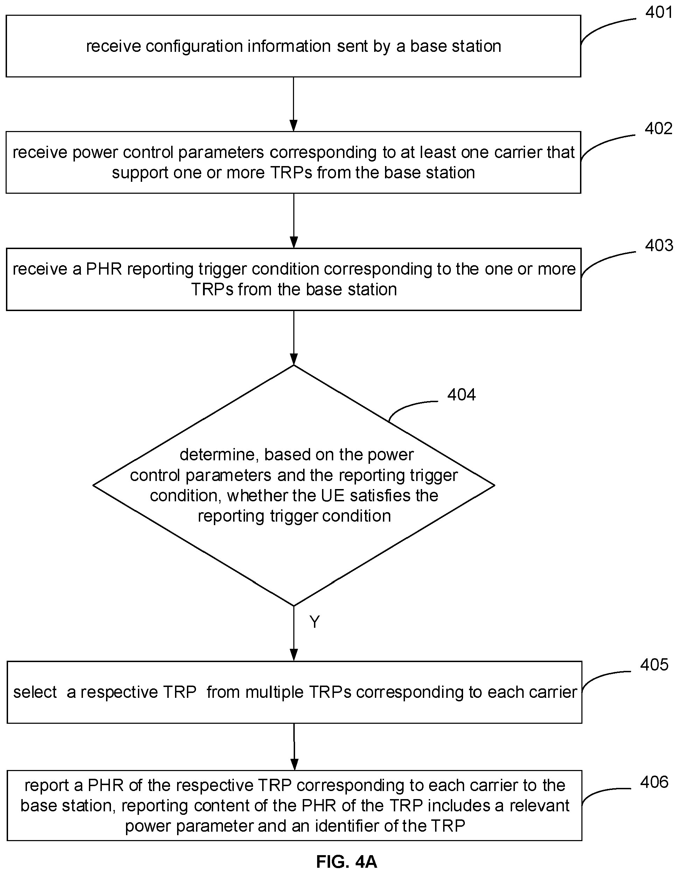

FIG. 4A is a flowchart illustrating a method for reporting a PHR according to an embodiment of the disclosure. The method is performed by a UE. As illustrated in FIG. 4A, the method for reporting a PHR may include the following:
At block 401, configuration information sent by a base station is received.
At block 402, one or more power control parameters corresponding to at least one carrier that support one or more TRPs are received from the base station.
At block 403, a PHR reporting trigger condition corresponding to the one or more TRPs is received from the base station.
At block 404, it is determined whether the UE meets the reporting trigger condition based on the one or more power control parameters and the reporting trigger condition, and a block 405 is performed when the UE meets the reporting trigger condition.

In one embodiment of the disclosure, when the UE meets the reporting trigger condition, it means that the PHR needs to be reported to the base station at present, and the block 405 may be performed.

At block 405, for each carrier, a TRP is selected from multiple TRPs corresponding to the carrier.

For relevant introductions about blocks 401 to 405, reference may be made to the foregoing embodiments, and details are not described in this embodiment of the disclosure.

At block 406, for each carrier, a PHR of the TRP is reported to the base station, and reporting content of the PHR of the respective TRP includes the relevant power parameter and an identifier of the TRP.

In an embodiment of the disclosure, the relevant power parameter may include at least one of:
reporting a maximum power that can be sent by one TRP on the carrier after a power back-off in response to the carrier being configured with the power back-off;
reporting a power headroom of one TRP after a real PUSCH is sent, in response to the carrier being configured with a PUSCH and there is a real PUSCH transmission at the UE;
reporting a power headroom of one TRP after a reference PUSCH is sent, in response to the carrier being configured with a PUSCH and there is a real PUSCH transmission at the UE;
reporting a power headroom of one TRP after a reference PUSCH is sent, in response to the carrier being configured with a PUSCH and there is no real PUSCH transmission at the UE;
reporting a power headroom of one TRP after a real PUCCH is sent, in response to the carrier being configured with a PUCCH and there is a real PUCCH transmission at the UE;
reporting a power headroom of one TRP after a reference PUCCH is sent, in response to the carrier being configured with a PUCCH and there is a real PUCCH transmission at the UE;
reporting a power headroom of one TRP after a reference PUCCH is sent, in response to the carrier being configured with a PUCCH and there is no real PUCCH transmission at the UE;
reporting a power headroom of one TRP after a real SRS is sent, in response to the carrier being configured with an SRS and there is a real SRS transmission at the UE;
reporting a power headroom of one TRP after a reference SRS is sent, in response to the carrier being configured with an SRS and there is a real SRS transmission at the UE;
reporting a power headroom of one TRP after a reference SRS is sent, in response to the carrier being configured with an SRS and there is no real SRS transmission at the UE;
reporting a power headroom of the TRP after a real PRACH is sent, in response to the carrier being configured with a PRACH and there is a real PRACH transmission at the UE;
reporting a power headroom of the TRP after a reference PRACH is sent, in response to the carrier being configured with a PRACH and there is a real PRACH transmission at the UE;
reporting a power headroom of the TRP after a reference PRACH is sent, in response to the carrier being configured with a PRACH and there is no real PRACH transmission at the UE; or
reporting a power back-off value of the UE.

It is noteworthy that, in an embodiment of the disclosure, the reporting content may include any of the foregoing. In another embodiment of the disclosure, the reporting content may include any combination of the foregoing.

Further, it is noteworthy that, in an embodiment of the disclosure, the UE may report the PHR of the TRP through the MAC-CE signaling.

The following is an example of the reporting format of the PHR MAC-CE when the reporting content of the PHR of one TRP includes the relevant power parameter and the identifier of this TPR.

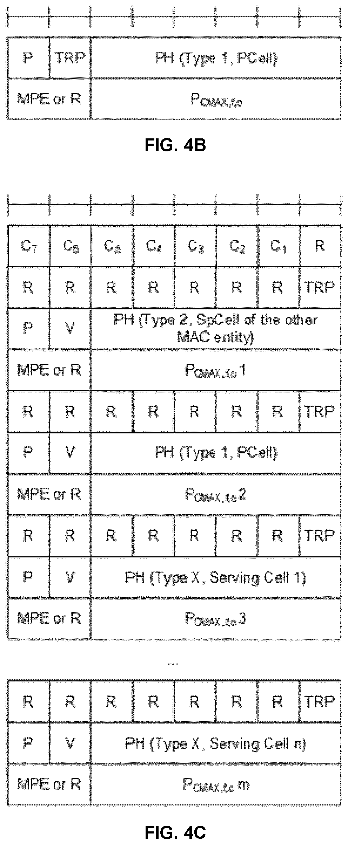

FIG. 4B is a schematic diagram illustrating a reporting format of the PHR MAC-CE under single-TRP transmission according to an embodiment of the disclosure. As illustrated in FIG. 4B, the reporting format of the PHR MAC-CE under the single-TRP includes fields "P," "PH," "MPE," "P_{CMAC,f,c}," and "TRP".

FIG. 4C is a schematic diagram illustrating a reporting format of the PHR MAC-CE under multi-TRP transmission when the number of cells is less than or equal to 8 according to an embodiment of the disclosure. As illustrated in FIG. 4C, the reporting format of the PHR MAC-CE under the multi-TRP includes fields "P," "PH," "MPE," "P_{CMAC,f,ci}," "V,", "Ci," and " TRP".

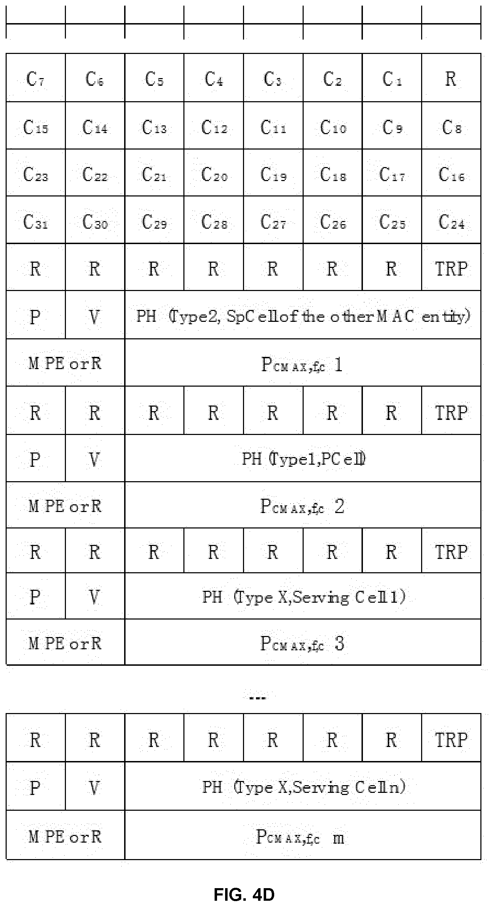

FIG. 4D is a schematic diagram illustrating a reporting format of a PHR MAC-CE under multi-TRP transmission when the number of cells is greater than 8 according to an embodiment of the disclosure. As illustrated in FIG. 4D, the reporting format of the PHR MAC-CE under the multi-TRP includes fields "P," "PH," "MPE," "P_{CMAC,f,ci}," "V", "Ci," and "TRP".

The meaning of the field "TRP" is: indicating the identifier of the respective TRP that reports the PHR on each carrier.

For related introductions of other fields, reference may be made to the foregoing embodiments, and the embodiments of the disclosure are not described in detail here.

In conclusion, in the method for reporting a PHR according to embodiments of the disclosure, the UE will receive, from the base station, the one or more power control parameters of the one or more TRPs corresponding to at least one carrier and the reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide a method for reporting a PHR suitable for a multi-TRP scenario. In addition, in the method according to embodiments of the disclosure, not only a respective power control parameter corresponding to each carrier is involved, but also a respective power control parameter corresponding to each TRP on each carrier is involved; and not only a reporting trigger condition based on one or more power control parameters corresponding to at least one carrier is involved, but also a reporting trigger condition based on one or more power control parameter corresponding to one or more TRP on at least one carrier is involved, thereby enhancing the configuration of the power control parameter and the reporting trigger condition.

Moreover, in embodiments of the disclosure, in reporting the PHR(s), one TRP will be selected for each carrier to report the respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

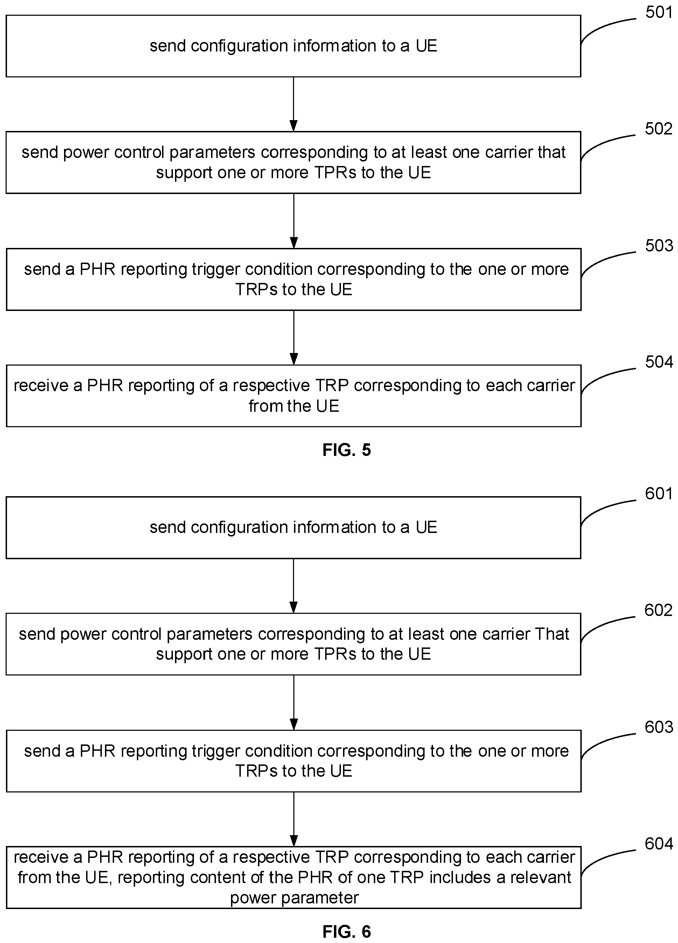

FIG. 5 is a flowchart illustrating a method for reporting a PHR according to an embodiment of the disclosure. The method is performed by a base station. As illustrated in FIG. 5, the method for reporting a PHR may include the following.

At block 501, configuration information is sent to a UE.

In an embodiment of the disclosure, the method according to embodiments of the disclosure may be adapted to a Multi-TRP scenario.

In an embodiment of the disclosure, the above mentioned "configuration information" may be used for instructing the UE to support, on one carrier, the PHR reporting for one single TRP.

It may be seen that, the methods according to embodiments of the disclosure are performed by a UE that supports single-TRP reporting on one carrier in the Multi-TRP scenario.

At block 502, one or more power control parameters corresponding to at least one carrier that support one or more TRPs are sent to the UE.

In an embodiment of the disclosure, each TRP may correspond to a respective power control parameter, and the power control parameters corresponding to different TRPs are different.

In one embodiment of the disclosure, in the multi-TRP scenario, processes of sending the one or more power control parameters of the one or more TRPs by the base station through the one or more TRPs are independent from each other, thereby enhancing independence between TRPs and enabling better scheduling of resources in the multi-TRP scenario.

Further, in an embodiment of the disclosure, each power control parameter may include at least one of:
first information corresponding to a TRP on a carrier; or
second information corresponding to a carrier.

In an embodiment of the disclosure, the first information corresponding to the TRP on the carrier may include at least one of:
identifier information corresponding to the TRP on the carrier;
identifier information of a downlink path loss reference carrier corresponding to the TRP on the carrier;
a downlink path loss change value corresponding to the TRP on the carrier;
an uplink power back-off change value corresponding to the TRP on the carrier;
a PHR-periodic timer corresponding to the TRP on the carrier;
a PHR-prohibit timer corresponding to the TRP on the carrier;
an MPE power threshold corresponding to the TRP on the carrier;
an MPE-prohibit timer corresponding to the TRP on the carrier;
an uplink MPE power back-off change value corresponding to the TRP on the carrier; or
an MPE FR2 (millimeter wave) corresponding to the TRP on the carrier.

It is noteworthy that, in an embodiment of the disclosure, the first information corresponding to the TRP on the carrier may include any one of the foregoing. In another embodiment of the disclosure, the first information corresponding to the TRP on the carrier may include any combination of the foregoing.

In an embodiment of the disclosure, the identifier information corresponding to the TRP on the carrier in the first information may include at least one of:
an identifier of an uplink physical channel of the TRP on the carrier;
a beam information identifier of the TRP on the carrier;
an SRS resource set identifier of the TRP on the carrier; or
a power control parameter set identifier of the TRP on the carrier.

In an embodiment of the disclosure, the above-mentioned "uplink physical channel" may include at least one of:
a PUSCH;
a PUSCH;
an SRS; or
a PRACH.

In an embodiment of the disclosure, the above-mentioned "second information corresponding to a carrier" may include at least one of:
identifier information of a downlink path loss reference carrier corresponding to the carrier;
a downlink path loss change value corresponding to the carrier;
an uplink power back-off change value corresponding to the carrier;
a PHR-periodic timer corresponding to the carrier;
a PHR-prohibit timer corresponding to the carrier;
an MPE power threshold corresponding to the carrier;
an MPE-prohibit timer corresponding to the carrier;
an uplink MPE power back-off change value corresponding to the carrier; or
an MPE FR2 reporting corresponding to the carrier.

It is noteworthy that, in an embodiment of the disclosure, the second information corresponding to the carrier may include any one of the foregoing. In another embodiment of the disclosure, the second information corresponding to the carrier may include any combination of the foregoing.

At block 503, a PHR reporting trigger condition corresponding to the one or more TRPs is sent to the UE.

In an embodiment of the disclosure, the reporting trigger condition may include at least one of:
a change in identifier information corresponding to a TRP on a carrier;
a change in a downlink path loss reference carrier corresponding to a TRP on a carrier;
a change in a sending carrier of an uplink physical channel of a TRP on a carrier;
a PHR-periodic timer corresponding to a TRP on a carrier expiring;
a PHR-prohibit timer corresponding to a TRP on a carrier expiring and an actual downlink path loss change value corresponding to the TRP exceeding a downlink path loss change value corresponding to the TRP on the carrier included in the power control parameter;
a PHR-prohibit timer corresponding to a TRP on a carrier expiring and an actual uplink power back-off change value corresponding to the TRP exceeding an uplink power back-off change value of the TRP on the carrier included in the power control parameter;
a PHR-prohibit timer corresponding to a TRP on a carrier expiring and an actual downlink path loss change value corresponding to the TRP exceeding a downlink path loss change value corresponding to the carrier included in the power control parameter;
a PHR-prohibit timer corresponding to a TRP on a carrier expiring and an actual uplink power back-off change value corresponding to the TRP exceeding an uplink power back-off change value corresponding to the carrier included in the power control parameter;
a PHR-periodic timer corresponding to a carrier expiring;
a PHR-prohibit timer corresponding to a carrier expiring and an actual downlink path loss change value corresponding to a TRP exceeding a downlink path loss change value corresponding to the TRP on the carrier included in the power control parameter;
a PHR-prohibit timer corresponding to a carrier expiring and an actual uplink power back-off change value corresponding to a TRP exceeding an uplink power back-off change value corresponding to the TRP on the carrier included in the power control parameter;
a PHR-prohibit timer corresponding to a carrier expiring and an actual downlink path loss change value corresponding to a TRP exceeding a downlink path loss change value corresponding to the carrier included in the power control parameter;
a PHR-prohibit timer corresponding to a carrier expiring and an actual uplink power back-off change value corresponding to a TRP exceeding an uplink power back-off change value corresponding to the carrier included in the power control parameter;
a change in a downlink path loss reference carrier corresponding to a carrier;
configuring a MPE FR2 reporting corresponding to a TRP on a carrier, and the MPE power back-off change value corresponding to the TRP exceeding an MPE power threshold corresponding to the TRP on the carrier included in the power control parameter;
configuring an MPE FR2 reporting corresponding to a TRP on a carrier, and an MPE power back-off change value corresponding to the TRP exceeding an uplink MPE power back-off change value corresponding to the TRP on the carrier included in the power control parameter;
configuring an MPE FR2 reporting corresponding to a TRP on a carrier, and an MPE power back-off change value corresponding to the TRP exceeding an MPE power threshold corresponding to the carrier included in the power control parameter;
configuring an MPE FR2 reporting corresponding to a TRP on a carrier, and an MPE power back-off change value corresponding to the TRP exceeding an uplink MPE power back-off change value corresponding to the carrier included in the power control parameter;
configuring an MPE FR2 reporting corresponding to a carrier and an MPE power back-off change value corresponding to a TRP exceeding an MPE power threshold corresponding to the TRP on the carrier included in the power control parameter;
configuring an MPE FR2 reporting corresponding to a carrier and an MPE power back-off change value corresponding to a TRP exceeding an uplink MPE power back-off change value corresponding to the TRP on the carrier included in the power control parameter;
configuring an MPE FR2 reporting corresponding to a carrier, and an MPE power back-off change value corresponding to a TRP exceeding an MPE power threshold corresponding to the carrier included in the power control parameter;
configuring an MPE FR2 reporting corresponding to a carrier, and an MPE power back-off change value corresponding to a TRP exceeding an uplink MPE power back-off change value corresponding to the carrier included in the power control parameter;
an MPE-prohibit timer corresponding to a TRP on a carrier expiring; or
an MPE-prohibit timer corresponding to a carrier expiring.

It is noteworthy that, in an embodiment of the disclosure, the reporting trigger condition may include any one of the foregoing. In another embodiment of the disclosure, the reporting trigger condition may include any combination of the foregoing.

At block 504, a PHR reporting of a respective TRP corresponding to each carrier is received from the UE.

In an embodiment of the disclosure, reporting content of the PHR of one TRP reported by the UE to the base station may include a relevant power parameter.

The relevant power parameter may include at least one of:
reporting a maximum power that can be sent by one TRP on the carrier after a power back-off, in response to the carrier being configured with the power back-off;
reporting a power headroom of one TRP after a real PUSCH is sent, in response to the carrier being configured with a PUSCH and there is a real PUSCH transmission at the UE;
reporting a power headroom of one TRP after a reference PUSCH is sent, in response to the carrier being configured with a PUSCH and there is a real PUSCH transmission at the UE;
reporting a power headroom of one TRP after a reference PUSCH is sent, in response to the carrier being configured with a PUSCH and there is no real PUSCH transmission at the UE;
reporting a power headroom of one TRP after a real PUCCH is sent, in response to the carrier being configured with a PUCCH and there is a real PUCCH transmission at the UE;
reporting a power headroom of one TRP after a reference PUCCH is sent, in response to the carrier being configured with a PUCCH and there is a real PUCCH transmission at the UE;
reporting a power headroom of one TRP after a reference PUCCH is sent, in response to the carrier being configured with a PUCCH and there is no real PUCCH transmission at the UE;
reporting a power headroom of one TRP after a real SRS is sent, in response to the carrier being configured with an SRS and there is a real SRS transmission at the UE;
reporting a power headroom of one TRP after a reference SRS is sent, in response to the carrier being configured with an SRS and there is a real SRS transmission at the UE;
reporting a power headroom of one TRP after a reference SRS is sent, in response to the carrier being configured with an SRS and there is no real SRS transmission at the UE;
reporting a power headroom of one TRP after a real PRACH is sent, in response to the carrier being configured with a PRACH and there is a real PRACH transmission at the UE;
reporting a power headroom of one TRP after a reference PRACH is sent, in response to the carrier being configured with a PRACH and there is a real PRACH transmission at the UE;
reporting a power headroom of one TRP after a reference PRACH is sent, in response to the carrier being configured with a PRACH and there is no real PRACH transmission at the UE; or
reporting a power back-off value of the UE.

It is noteworthy that, in an embodiment of the disclosure, the reporting content may include any of the foregoing. In another embodiment of the disclosure, the reporting content may include any combination of the foregoing.

Below, the "PUSCH" is taken as an example ("PUCCH," "SRS," and "PRACH" are similar) to describe the above-mentioned "real PUSCH is sent" and "reference PUSCH is sent".

In one embodiment of the disclosure, "the power headroom after the actual PUSCH is sent" means the power headroom of the PUSCH after the actual sending on the PUSCH.

In one embodiment of the disclosure, "the power headroom after the reference PUSCH is sent" means that: when there is no actual transmission on the PUSCH, but the power headroom of the PUSCH needs to be reported, at this time, the UE may determine a reference PUSCH base on an indication from of the network, calculate the power headroom of the PUSCH or other channels that need to report PHR using the transmission format and transmission parameters corresponding to the reference PUSCH, and use the calculated power headroom as the power headroom of the PUSCH that needs to report the PHR.

Further, it is noteworthy that, in an embodiment of the disclosure, on the basis that the reporting content of the PHR includes the above-mentioned relevant power parameter, the UE may also add an identifier of the TRP in the reporting content of the PHR.

That is, in an embodiment of the disclosure, when the UE reports the PHR, the reporting content may include: the relevant power parameter. In another embodiment of the disclosure, when the UE reports the PHR, the reporting content may include: the relevant power parameter + the identifier of the TRP.

In conclusion, in the method for reporting a PHR according to embodiments of the disclosure, the UE will receive, from the base station, the one or more power control parameters of the one or more TRPs corresponding to at least one carrier and the reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide a method for reporting a PHR suitable for a multi-TRP scenario. In addition, in the method according to embodiments of the disclosure, not only a respective power control parameter corresponding to each carrier is involved, but also a respective power control parameter corresponding to each TRP on each carrier is involved; and not only a reporting trigger condition based on one or more power control parameters corresponding to at least one carrier is involved, but also a reporting trigger condition based on one or more power control parameter corresponding to one or more TRP on at least one carrier is involved, thereby enhancing the configuration of the power control parameter and the reporting trigger condition.

Moreover, in embodiments of the disclosure, in reporting the PHR(s), one TRP will be selected for each carrier to report the respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

FIG. 6 is a flowchart illustrating a method for reporting a PHR according to an embodiment of the disclosure. The method is performed by a base station. As illustrated in FIG. 6, the method for reporting a PHR may include the following.

At block 301, configuration information is sent to UE.

At block 602, one or more power control parameters corresponding to at least one carrier that support one or more TRPs are sent to the UE.

At block 603, a PHR reporting trigger condition corresponding to the one or more TRPs is sent to the UE.

At block 604, a PHR reporting of a respective TRP corresponding to each carrier is received from the UE, and a reporting content of the PHR of one TRP includes a relevant power parameter.

For relevant introductions about blocks 601 to 604, reference may be made to the descriptions of the foregoing embodiments, and details are not described in this embodiment of the disclosure.

In conclusion, in methods for reporting a PHR according to embodiments of the disclosure, the UE will receive, from the base station, the one or more power control parameters of the one or more TRPs corresponding to at least one carrier and the PHR reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide methods for reporting a PHR suitable for a multi-TRP scenario. In addition, in the methods according to embodiments of the disclosure, not only a respective power control parameter corresponding to each carrier is involved, but also a respective power control parameter corresponding to each TRP on each carrier is involved; and not only a reporting trigger condition based on the power control parameter corresponding to the carrier is involved, but also a reporting trigger condition based on the power control parameter corresponding to the TRP on the carrier is involved, thereby enhancing the configuration of the power control parameter and the reporting trigger condition.

Moreover, in embodiments of the disclosure, in reporting the PHR, one TRP will be selected for each carrier to report its respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

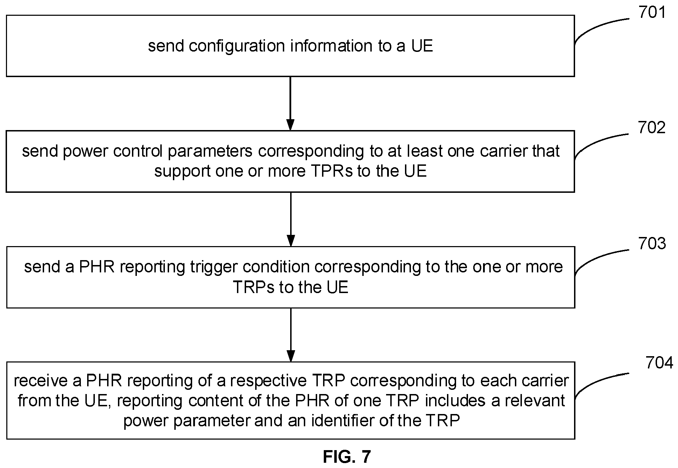

FIG. 7 is a flowchart illustrating a method for reporting a PHR according to an embodiment of the disclosure. The method is performed by a base station. As illustrated in FIG. 7 , the method for reporting a PHR may include the following.

At block 701, configuration information is sent to UE.

At block 702, one or more power control parameters corresponding to at least one carrier that support one or more TRPs are sent to the UE.

At block 703, a PHR reporting trigger condition corresponding to the one or more TRPs is sent to the UE.

At block 704, a PHR reporting of a respective TRP corresponding to each carrier is received from the UE, and a reporting content of the PHR of one TRP includes a relevant power parameter and an identifier of the TRP.

For related introductions about blocks 701 to 704, reference may be made to the descriptions of the foregoing embodiments, and details are not described in this embodiment of the disclosure.

In conclusion, in methods for reporting a PHR according to embodiments of the disclosure, the UE will receive, from the base station, the one or more power control parameters of the one or more TRPs corresponding to at least one carrier and the PHR reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide methods for reporting a PHR suitable for a multi-TRP scenario. In addition, in the methods according to embodiments of the disclosure, not only a respective power control parameter corresponding to each carrier is involved, but also a respective power control parameter corresponding to each TRP on each carrier is involved; and not only a reporting trigger condition based on the power control parameter corresponding to the carrier is involved, but also a reporting trigger condition based on the power control parameter corresponding to the TRP on the carrier is involved, thereby enhancing the configuration of the power control parameter and the reporting trigger condition.

Moreover, in embodiments of the disclosure, in reporting the PHR, one TRP will be selected for each carrier to report its respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

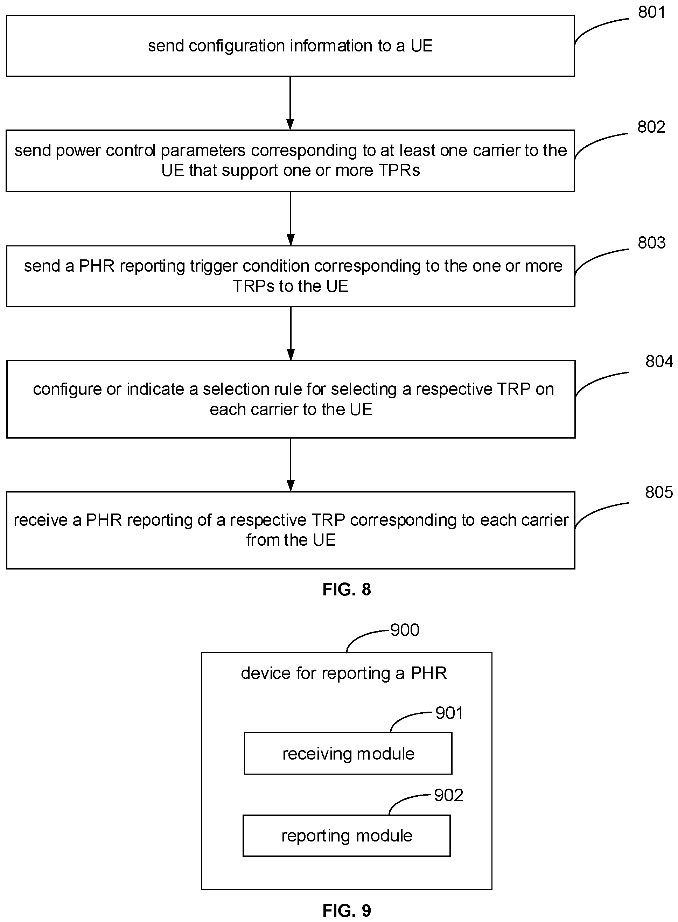

FIG. 8 is a flowchart illustrating a method for reporting a PHR according to an embodiment of the disclosure. The method is performed by a base station. As illustrated in FIG. 8, the method for reporting a PHR may include the following.

At block 801, configuration information is sent to UE.

At block 802, one or more power control parameters corresponding to at least one carrier that support one or more TRPs are sent to the UE.

At block 803, a PHR reporting trigger condition corresponding to the one or more TRPs is sent to the UE.

At block 804, a selection rule for selecting a respective TRP on each carrier is configured or indicated to the UE.

In an embodiment of the disclosure, the selection rule may include:
Rule 1: selecting a TRP corresponding to a predefined transmission opportunity on the carrier as the TPR; or
Rule 2: determining a TRP on the carrier as the TRP by default.

For relevant introductions about the Rule 1 and the Rule 2, reference may be made to the foregoing embodiments, and details are not described in this embodiment of the disclosure.

At block 805, a PHR reporting of a respective TRP corresponding to each carrier is received from the UE.

For relevant introductions about blocks 801 to 803 and the block 805, reference may be made to the descriptions of the foregoing embodiments, and details are not described here in the embodiments of the disclosure.

In conclusion, in the method for reporting a PHR according to embodiments of the disclosure, the UE will receive, from the base station, the one or more power control parameters of the one or more TRPs corresponding to at least one carrier and the reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide a method for reporting a PHR suitable for a multi-TRP scenario. In addition, in the method according to embodiments of the disclosure, not only a respective power control parameter corresponding to each carrier is involved, but also a respective power control parameter corresponding to each TRP on each carrier is involved; and not only a reporting trigger condition based on one or more power control parameters corresponding to at least one carrier is involved, but also a reporting trigger condition based on one or more power control parameter corresponding to one or more TRP on at least one carrier is involved, thereby enhancing the configuration of the power control parameter and the reporting trigger condition.

Moreover, in embodiments of the disclosure, in reporting the PHR(s), one TRP will be selected for each carrier to report the respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

FIG. 9 is a schematic diagram illustrating a device 900 for reporting a PHR according to an embodiment of the disclosure. As illustrated in FIG. 9, the device 900 includes a receiving module 901 and a reporting module 902.

The receiving module 901 is configured to receive configuration information sent by a base station. The configuration information is used for instructing the UE to support, on one carrier, the PHR reporting for a single TRP.

The receiving module 901 is further configured to receive, from the base station, one or more power control parameters corresponding to at least one carrier that support one or more TRPs.

The receiving module 901 is further configured to receive, from the base station, a PHR reporting trigger condition corresponding to the one or more TRPs.

The reporting module 902 is configured to trigger the PHR reporting for a respective TRP corresponding to each carrier based on the one or more power control parameters and the reporting trigger condition.

In conclusion, in the device for reporting a PHR according to embodiments of the disclosure, the UE will receive, from the base station, the one or more power control parameters of the one or more TRPs corresponding to at least one carrier and the reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide a method for reporting a PHR suitable for a multi-TRP scenario. In addition, in the method according to embodiments of the disclosure, not only a respective power control parameter corresponding to each carrier is involved, but also a respective power control parameter corresponding to each TRP on each carrier is involved; and not only a reporting trigger condition based on one or more power control parameters corresponding to at least one carrier is involved, but also a reporting trigger condition based on one or more power control parameter corresponding to one or more TRP on at least one carrier is involved, thereby enhancing the configuration of the power control parameter and the reporting trigger condition.

Moreover, in embodiments of the disclosure, in reporting the PHR(s), one TRP will be selected for each carrier to report the respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

In an embodiment of the disclosure, each power control parameter includes at least one of:
first information corresponding to a TRP on a carrier; or
second information corresponding to a carrier.

In an embodiment of the disclosure, the first information corresponding to the TRP on the carrier may include at least one of:
identifier information corresponding to the TRP on the carrier;
identifier information of a downlink path loss reference carrier corresponding to the TRP on the carrier;
a downlink path loss change value corresponding to the TRP on the carrier;
an uplink power back-off change value corresponding to the TRP on the carrier;
a PHR-periodic timer corresponding to the TRP on the carrier;
a PHR-prohibit timer corresponding to the TRP on the carrier;
an MPE power threshold corresponding to the TRP on the carrier;
an MPE-prohibit timer corresponding to the TRP on the carrier;
an uplink MPE power back-off change value corresponding to the TRP on the carrier; or
an MPE FR2 (millimeter wave) corresponding to the TRP on the carrier.

In an embodiment of the disclosure, the identifier information corresponding to the TRP on the carrier includes at least one of:
an identifier of an uplink physical channel of the TRP on the carrier;
a beam information identifier of the TRP on the carrier;
an SRS resource set identifier of the TRP on the carrier; or
a power control parameter set identifier of the TRP on the carrier.

In an embodiment of the disclosure, the uplink physical channel may include at least one of:
a PUSCH;
a PUSCH;
an SRS; or
a PRACH.

In an embodiment of the disclosure, the second information corresponding to a carrier may include at least one of:
identifier information of a downlink path loss reference carrier corresponding to the carrier;
a downlink path loss change value corresponding to the carrier;
an uplink power back-off change value corresponding to the carrier;
a PHR-periodic timer corresponding to the carrier;
a PHR-prohibit timer corresponding to the carrier;
an MPE power threshold corresponding to the carrier;
an MPE-prohibit timer corresponding to the carrier;
an uplink MPE power back-off change value corresponding to the carrier; or
an MPE FR2 reporting corresponding to the carrier.

In an embodiment of the disclosure, the reporting trigger condition includes at least one of:
a change in identifier information corresponding to a TRP on a carrier;
a change in a downlink path loss reference carrier corresponding to a TRP on a carrier;
a change in a sending carrier of an uplink physical channel of a TRP on a carrier;
a PHR-periodic timer corresponding to a TRP on a carrier expiring;
a PHR-prohibit timer corresponding to a TRP on a carrier expiring and an actual downlink path loss change value corresponding to the TRP exceeding a downlink path loss change value corresponding to the TRP on the carrier included in the power control parameter;
a PHR-prohibit timer corresponding to a TRP on a carrier expiring and an actual uplink power back-off change value corresponding to the TRP exceeding an uplink power back-off change value of the TRP on the carrier included in the power control parameter;
a PHR-prohibit timer corresponding to a TRP on a carrier expiring and an actual downlink path loss change value corresponding to the TRP exceeding a downlink path loss change value corresponding to the carrier included in the power control parameter;
a PHR-prohibit timer corresponding to a TRP on a carrier expiring and an actual uplink power back-off change value corresponding to the TRP exceeding an uplink power back-off change value corresponding to the carrier included in the power control parameter;
a PHR-periodic timer corresponding to a carrier expiring;
a PHR-prohibit timer corresponding to a carrier expiring and an actual downlink path loss change value corresponding to a TRP exceeding a downlink path loss change value corresponding to the TRP on the carrier included in the power control parameter;
a PHR-prohibit timer corresponding to a carrier expiring and an actual uplink power back-off change value corresponding to a TRP exceeding an uplink power back-off change value corresponding to the TRP on the carrier included in the power control parameter;
a PHR-prohibit timer corresponding to a carrier expiring and an actual downlink path loss change value corresponding to a TRP exceeding a downlink path loss change value corresponding to the carrier included in the power control parameter;
a PHR-prohibit timer corresponding to a carrier expiring and an actual uplink power back-off change value corresponding to a TRP exceeding an uplink power back-off change value corresponding to the carrier included in the power control parameter;
a change in a downlink path loss reference carrier corresponding to a carrier;
configuring a MPE FR2 reporting corresponding to a TRP on a carrier, and the MPE power back-off change value corresponding to the TRP exceeding an MPE power threshold corresponding to the TRP on the carrier included in the power control parameter;
configuring an MPE FR2 reporting corresponding to a TRP on a carrier, and an MPE power back-off change value corresponding to the TRP exceeding an uplink MPE power back-off change value corresponding to the TRP on the carrier included in the power control parameter;
configuring an MPE FR2 reporting corresponding to a TRP on a carrier, and an MPE power back-off change value corresponding to the TRP exceeding an MPE power threshold corresponding to the carrier included in the power control parameter;
configuring an MPE FR2 reporting corresponding to a TRP on a carrier, and an MPE power back-off change value corresponding to the TRP exceeding an uplink MPE power back-off change value corresponding to the carrier included in the power control parameter;
configuring an MPE FR2 reporting corresponding to a carrier and an MPE power back-off change value corresponding to a TRP exceeding an MPE power threshold corresponding to the TRP on the carrier included in the power control parameter;
configuring an MPE FR2 reporting corresponding to a carrier and an MPE power back-off change value corresponding to a TRP exceeding an uplink MPE power back-off change value corresponding to the TRP on the carrier included in the power control parameter;
configuring an MPE FR2 reporting corresponding to a carrier, and an MPE power back-off change value corresponding to a TRP exceeding an MPE power threshold corresponding to the carrier included in the power control parameter;
configuring an MPE FR2 reporting corresponding to a carrier, and an MPE power back-off change value corresponding to a TRP exceeding an uplink MPE power back-off change value corresponding to the carrier included in the power control parameter;
an MPE-prohibit timer corresponding to a TRP on a carrier expiring; or
an MPE-prohibit timer corresponding to a carrier expiring.

In an embodiment of the disclosure, the reporting module is further configured to:
for each carrier, select a TRP on the carrier in response to determining that the UE satisfies the reporting trigger condition based on the one or more power control parameters and the reporting trigger condition; and
for each carrier, report the PHR of the TRP to the base station.

In an embodiment of the disclosure, the reporting module is further configured to:
select one TRP on the carrier based on a predefined selection rule;
select one TRP on the carrier based on a selection rule configured or indicated by a network; or
autonomously select one TPR on the carrier.

In an embodiment of the disclosure, the selection rule includes:
Rule 1: selecting a TRP corresponding to a predefined transmission opportunity on the carrier as the one TPR; or
Rule 2: determining a TRP on the carrier as the one TRP by default.

In an embodiment of the disclosure, the reporting module is further configured to:
report a maximum power that can be sent by one TRP on the carrier after a power back-off, in response to the carrier being configured with the power back-off;
report a power headroom of one TRP after a real PUSCH is sent, in response to the carrier being configured with a PUSCH and there is a real PUSCH transmission at the UE;
report a power headroom of one TRP after a reference PUSCH is sent, in response to the carrier being configured with a PUSCH and there is a real PUSCH transmission at the UE;
report a power headroom of one TRP after a reference PUSCH is sent, in response to the carrier being configured with a PUSCH and there is no real PUSCH transmission at the UE;
report a power headroom of one TRP after a real PUCCH is sent, in response to the carrier being configured with a PUCCH and there is a real PUCCH transmission at the UE;
report a power headroom of one TRP after a reference PUCCH is sent, in response to the carrier being configured with a PUCCH and there is a real PUCCH transmission at the UE;
report a power headroom of one TRP after a reference PUCCH is sent, in response to the carrier being configured with a PUCCH and there is no real PUCCH transmission at the UE;
report a power headroom of one TRP after a real SRS is sent, in response to the carrier being configured with an SRS and there is a real SRS transmission at the UE;
report a power headroom of one TRP after a reference SRS is sent, in response to the carrier being configured with an SRS and there is a real SRS transmission at the UE;
report a power headroom of one TRP after a reference SRS is sent, in response to the carrier being configured with an SRS and there is no real SRS transmission at the UE;
report a power headroom of one TRP after a real PRACH is sent, in response to the carrier being configured with a PRACH and there is a real PRACH transmission at the UE;
report a power headroom of one TRP after a reference PRACH is sent, in response to the carrier being configured with a PRACH and there is a real PRACH transmission at the UE;
report a power headroom of one TRP after a reference PRACH is sent, in response to the carrier being configured with a PRACH and there is no real PRACH transmission at the UE; or
report a power back-off value of the UE.

In an embodiment of the disclosure, the reporting module is further configured to:
report an identifier of the TRP

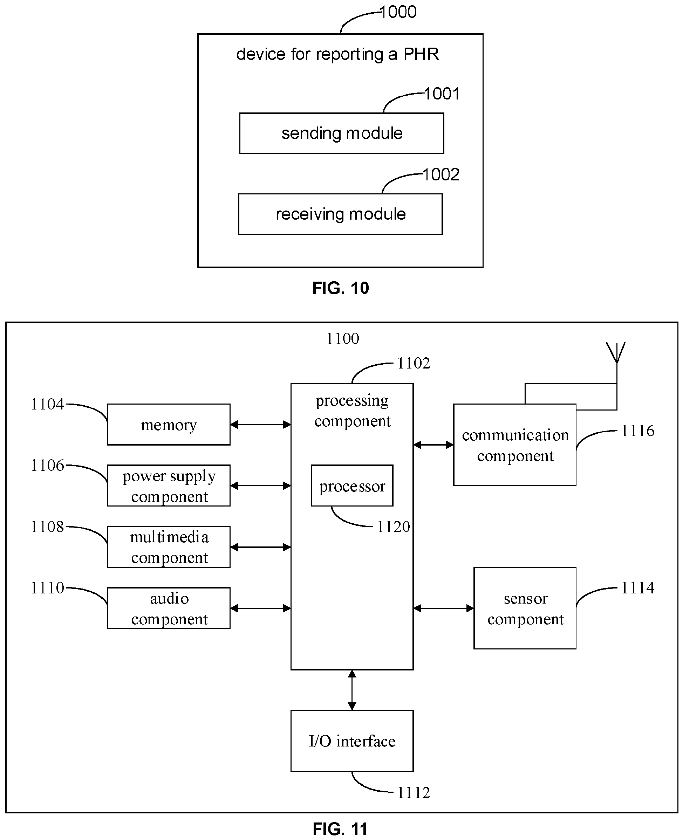

FIG. 10 is a schematic diagram illustrating a device 1000 for reporting a PHR according to an embodiment of the disclosure. As illustrated in FIG. 10, the device 1000 includes a sending module 1001 and a receiving module 1002.

The sending module 1001 is configured to send configuration information to the UE. The configuration information is used for instructing the UE to support, on one carrier, a PHR reporting for one single TRP.

The sending module 1001 is further configured to send one or more power control parameters corresponding to at least one carrier that support one or more TRPs to the UE.

The sending module 1001 is further configured to send a PHR reporting trigger condition corresponding to the one or more TRPs to the UE.

The receiving module 1002 is configured to receive, from the UE, a PHR reporting of a respective TRP corresponding to each carrier.

In conclusion, in the device for reporting a PHR according to embodiments of the disclosure, the UE will receive, from the base station, the one or more power control parameters of the one or more TRPs corresponding to at least one carrier and the reporting trigger condition corresponding to the one or more TRPs. Afterwards, the base station triggers the PHR reporting for a respective TRP corresponding to each carrier based on the one or more power control parameters and the reporting trigger condition. In this way, embodiments of the disclosure provide a method for reporting a PHR suitable for a multi-TRP scenario. In addition, in the method according to embodiments of the disclosure, not only a respective power control parameter corresponding to each carrier is involved, but also a respective power control parameter corresponding to each TRP on each carrier is involved; and not only a reporting trigger condition based on one or more power control parameters corresponding to at least one carrier is involved, but also a reporting trigger condition based on one or more power control parameter corresponding to one or more TRP on at least one carrier is involved, thereby enhancing the configuration of the power control parameter and the reporting trigger condition.

Moreover, in embodiments of the disclosure, in reporting the PHR(s), one TRP will be selected for each carrier to report the respective PHR, and a variety of options are provided for the reporting content, such that the reporting content is enriched and enhanced without increasing the amount of reported data. At the same time, in embodiments of the disclosure, an identifier of the TRP is also reported when reporting the PHR, and thus the base station may know which TRP corresponds to the reported PHR, to better support dynamic scheduling under different conditions of different channels, realize precise power control and ensure effective allocation of network resources.

In an embodiment of the disclosure, each power control parameter includes at least one of:
first information corresponding to a TRP on a carrier; or
second information corresponding to a carrier.

In an embodiment of the disclosure, the first information corresponding to the TRP on the carrier may include at least one of:
identifier information corresponding to the TRP on the carrier;
identifier information of a downlink path loss reference carrier corresponding to the TRP on the carrier;
a downlink path loss change value corresponding to the TRP on the carrier;
an uplink power back-off change value corresponding to the TRP on the carrier;
a PHR-periodic timer corresponding to the TRP on the carrier;
a PHR-prohibit timer corresponding to the TRP on the carrier;
an MPE power threshold corresponding to the TRP on the carrier;
an MPE-prohibit timer corresponding to the TRP on the carrier;
an uplink MPE power back-off change value corresponding to the TRP on the carrier; or
an MPE FR2 (millimeter wave) corresponding to the TRP on the carrier.

In an embodiment of the disclosure, the identifier information corresponding to the TRP on the carrier includes at least one of:
an identifier of an uplink physical channel of the TRP on the carrier;
a beam information identifier of the TRP on the carrier;
an SRS resource set identifier of the TRP on the carrier; or
a power control parameter set identifier of the TRP on the carrier.

In an embodiment of the disclosure, the uplink physical channel may include at least one of:
a PUSCH;
a PUSCH;
an SRS; or
a PRACH.

In an embodiment of the disclosure, the second information corresponding to a carrier may include at least one of:
identifier information of a downlink path loss reference carrier corresponding to the carrier;
a downlink path loss change value corresponding to the carrier;
an uplink power back-off change value corresponding to the carrier;
a PHR-periodic timer corresponding to the carrier;
a PHR-prohibit timer corresponding to the carrier;
an MPE power threshold corresponding to the carrier;
an MPE-prohibit timer corresponding to the carrier;
an uplink MPE power back-off change value corresponding to the carrier; or
an MPE FR2 reporting corresponding to the carrier.

In an embodiment of the disclosure, the reporting trigger condition includes at least one of:
a change in identifier information corresponding to a TRP on a carrier;
a change in a downlink path loss reference carrier corresponding to a TRP on a carrier;
a change in a sending carrier of an uplink physical channel of a TRP on a carrier;
a PHR-periodic timer corresponding to a TRP on a carrier expiring;
a PHR-prohibit timer corresponding to a TRP on a carrier expiring and an actual downlink path loss change value corresponding to the TRP exceeding a downlink path loss change value corresponding to the TRP on the carrier included in the power control parameter;
a PHR-prohibit timer corresponding to a TRP on a carrier expiring and an actual uplink power back-off change value corresponding to the TRP exceeding an uplink power back-off change value of the TRP on the carrier included in the power control parameter;
a PHR-prohibit timer corresponding to a TRP on a carrier expiring and an actual downlink path loss change value corresponding to the TRP exceeding a downlink path loss change value corresponding to the carrier included in the power control parameter;
a PHR-prohibit timer corresponding to a TRP on a carrier expiring and an actual uplink power back-off change value corresponding to the TRP exceeding an uplink power back-off change value corresponding to the carrier included in the power control parameter;
a PHR-periodic timer corresponding to a carrier expiring;
a PHR-prohibit timer corresponding to a carrier expiring and an actual downlink path loss change value corresponding to a TRP exceeding a downlink path loss change value corresponding to the TRP on the carrier included in the power control parameter;
a PHR-prohibit timer corresponding to a carrier expiring and an actual uplink power back-off change value corresponding to a TRP exceeding an uplink power back-off change value corresponding to the TRP on the carrier included in the power control parameter;
a PHR-prohibit timer corresponding to a carrier expiring and an actual downlink path loss change value corresponding to a TRP exceeding a downlink path loss change value corresponding to the carrier included in the power control parameter;
a PHR-prohibit timer corresponding to a carrier expiring and an actual uplink power back-off change value corresponding to a TRP exceeding an uplink power back-off change value corresponding to the carrier included in the power control parameter;
a change in a downlink path loss reference carrier corresponding to a carrier;
configuring a MPE FR2 reporting corresponding to a TRP on a carrier, and the MPE power back-off change value corresponding to the TRP exceeding an MPE power threshold corresponding to the TRP on the carrier included in the power control parameter;
configuring an MPE FR2 reporting corresponding to a TRP on a carrier, and an MPE power back-off change value corresponding to the TRP exceeding an uplink MPE power back-off change value corresponding to the TRP on the carrier included in the power control parameter;
configuring an MPE FR2 reporting corresponding to a TRP on a carrier, and an MPE power back-off change value corresponding to the TRP exceeding an MPE power threshold corresponding to the carrier included in the power control parameter;
configuring an MPE FR2 reporting corresponding to a TRP on a carrier, and an MPE power back-off change value corresponding to the TRP exceeding an uplink MPE power back-off change value corresponding to the carrier included in the power control parameter;
configuring an MPE FR2 reporting corresponding to a carrier and an MPE power back-off change value corresponding to a TRP exceeding an MPE power threshold corresponding to the TRP on the carrier included in the power control parameter;
configuring an MPE FR2 reporting corresponding to a carrier and an MPE power back-off change value corresponding to a TRP exceeding an uplink MPE power back-off change value corresponding to the TRP on the carrier included in the power control parameter;
configuring an MPE FR2 reporting corresponding to a carrier, and an MPE power back-off change value corresponding to a TRP exceeding an MPE power threshold corresponding to the carrier included in the power control parameter;
configuring an MPE FR2 reporting corresponding to a carrier, and an MPE power back-off change value corresponding to a TRP exceeding an uplink MPE power back-off change value corresponding to the carrier included in the power control parameter;
an MPE-prohibit timer corresponding to a TRP on a carrier expiring; or
an MPE-prohibit timer corresponding to a carrier expiring.

In an embodiment of the disclosure, the device is further configured to:
configure or indicate a selection rule for selecting a respective TRP on each carrier to the UE.

In an embodiment of the disclosure, the selection rule include:
Rule 1: selecting a TRP corresponding to a predefined transmission opportunity on the carrier as the one TPR; or
Rule 2: determining a TRP on the carrier as the one TRP by default.

In an embodiment of the disclosure, the receiving module is further configured to:
receive a maximum power that can be sent by one TRP on the carrier after a power back-off, in response to the carrier being configured with the power back-off;
receive a power headroom of one TRP after a real PUSCH is sent, in response to the carrier being configured with a PUSCH and there is a real PUSCH transmission at the UE;
receive a power headroom of one TRP after a reference PUSCH is sent (the PHR after the reference PUSCH is sent will be explained later), in response to the carrier being configured with a PUSCH and there is a real PUSCH transmission at the UE;
receive a power headroom of one TRP after a reference PUSCH is sent, in response to the carrier being configured with a PUSCH and there is no real PUSCH transmission at the UE;
receive a power headroom of one TRP after a real PUCCH is sent, in response to the carrier being configured with a PUCCH and there is a real PUCCH transmission at the UE;
receive a power headroom of one TRP after a reference PUCCH is sent, in response to the carrier being configured with a PUCCH and there is a real PUCCH transmission at the UE;
receive a power headroom of one TRP after a reference PUCCH is sent, in response to the carrier being configured with a PUCCH and there is no real PUCCH transmission at the UE;
receive a power headroom of one TRP after a real SRS is sent, in response to the carrier being configured with an SRS and there is a real SRS transmission at the UE;
receive a power headroom of one TRP after a reference SRS is sent, in response to the carrier being configured with an SRS and there is a real SRS transmission at the UE;
receive a power headroom of one TRP after a reference SRS is sent, in response to the carrier being configured with an SRS and there is no real SRS transmission at the UE;
receive a power headroom of one TRP after a real PRACH is sent, in response to the carrier being configured with a PRACH and there is a real PRACH transmission at the UE;
receive a power headroom of one TRP after a reference PRACH is sent, in response to the carrier being configured with a PRACH and there is a real PRACH transmission at the UE;
receive a power headroom of one TRP after a reference PRACH is sent, in response to the carrier being configured with a PRACH and there is no real PRACH transmission at the UE; or
receive a power back-off value of the UE.

In an embodiment of the disclosure, the receiving module is further configured to:
receive an identifier of the respective TRP.

Embodiments of the disclosure provide a computer storage medium, having an executable program stored thereon. After the executable program is executed by a processor, the methods illustrated in any one of FIGS. 1 to 4 or 5 to 8 may be performed.

In order to implement above embodiments, the disclosure further provides a computer program product including a computer program. When the computer program is executed by a processor, the methods illustrated in any one of FIGS. 1 to 4 or 5 to 8 are performed.

In addition, in order to realize the above-mentioned embodiments, the disclosure further provides a computer program. When the program is executed by a processor, the methods illustrated in any one of FIG. 1 to FIG. 4 or FIG. 5 to FIG. 8 may be performed.

FIG. 11 is a block diagram illustrating a UE 1100 according to an embodiment of the disclosure. For example, the UE 1100 may be a mobile phone, a computer, a digital broadcasting terminal device, a messaging device, a game console, a tablet device, a medical device, a fitness device, a personal digital assistant, and the like.

As illustrated in FIG. 11, the UE 1100 may include at least one of: a processing component 1102, a memory 1104, a power supply component 1106, a multimedia component 1108, an audio component 1110, an input/output (I/O) interface 1112, a sensor component 1113, or a communication component 1116.

The processing component 1102 generally controls overall operations of the UE 1100, such as those associated with display, phone calls, data communications, camera operations, and recording operations. The processing component 1102 may include at least one processor 1120 to execute instructions, so as to complete all or part of the blocks of the above methods. Or, the processing component 1102 may include at least one module to facilitate interaction between processing component 1102 and other components. For example, the processing component 1102 may include a multimedia module to facilitate interaction between the multimedia component 1108 and the processing component 1102.

The memory 1104 is configured to store various types of data to support operations at the UE 1100. Examples of such data include instructions for any application or method operating on the UE 1100, contact data, phonebook data, messages, pictures, videos, etc. The memory 1104 may be implemented by any type of volatile or non-volatile memory device or their combination, such as static random access memory (SRAM), electrically erasable programmable read-only memory (EEPROM), erasable Programmable Read Only Memory (EPROM), Programmable Read Only Memory (PROM), Read Only Memory (ROM), Magnetic Memory, Flash Memory, Magnetic or Optical Disk.

The power supply component 1106 provides power to various components of the UE 1100. The power component 1106 may include a power management system, at least one power supply, and other components associated with generating, managing, and distributing power for the UE 1100.

The multimedia component 1108 includes a screen providing an output interface between the UE 1100 and the user. In some embodiments, the screen may include a liquid crystal display (LCD) and a touch panel (TP). If the screen includes a touch panel, the screen may be implemented as a touch screen to receive input signals from a user. The touch panel includes at least one touch sensor to sense touch, slide, and gestures on the touch panel. The touch sensor may not only sense a boundary of a touch or slide action, but also detect a wake-up time and pressure related to the touch or slide operation. In some embodiments, the multimedia component 1108 includes a front-facing camera and/or a rear-facing camera. When the UE 1100 is in an operation mode, such as a shooting mode or a video mode, the front-facing camera and/or the rear-facing camera may receive external multimedia data. Each front-facing camera and rear-facing camera may be a fixed optical lens system or have focal length and optical zoom capability.

The audio component 1110 is configured to output and/or input audio signals. For example, the audio component 1110 includes a microphone (MIC), which is configured to receive an external audio signal when the UE 1100 is in an operation mode, such as a call mode, a recording mode, and a voice recognition mode. Received audio signals may be further stored in memory 1104 or sent via communication component 1116. In some embodiments, the audio component 1110 also includes a speaker for outputting audio signals.

The I/O interface 1112 provides an interface between the processing component 1102 and a peripheral interface module, which may be a keyboard, a click wheel, a button, and the like. These buttons may include, but are not limited to: a home button, volume buttons, start button, and lock button.

The sensor component 1113 includes at least one sensor, and is used to provide various aspects of state assessment for the UE 1100. For example, the sensor component 1113 may detect the open/closed state of the UE 1100 and the relative positioning of components, such as the display and the keypad of the UE1100. The sensor component 1113 may also detect the position change of the UE 1100 or a component of the UE1100, the presence or absence of the contact between the UE 1100 and the user, the orientation or acceleration/deceleration and temperature change of the UE1100. The sensor component 1113 may include a proximity sensor configured to detect the presence of nearby objects in the absence of any physical contact. The sensor component 1113 may also include an optical sensor, such as a CMOS or CCD image sensor, for use in imaging applications. In some embodiments, the sensor component 1113 may also include an acceleration sensor, a gyroscope sensor, a magnetic sensor, a pressure sensor or a temperature sensor.

The communication component 1116 is configured to facilitate wired or wireless communications between the UE 1100 and other devices. The UE 1100 may access wireless networks based on communication standards, such as WIFI, 2G or 3G, or a combination thereof. In an embodiment, the communication component 1116 receives a broadcast signal or broadcast related information from an external broadcast management system via a broadcast channel. In an embodiment, the communication component 1116 also includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology and other technologies.

In an embodiment, the UE 1100 may be implemented by at least one Application Specific Integrated Circuit (ASIC), Digital Signal Processor (DSP), Digital Signal Processing Device (DSPD), Programmable Logic Device (PLD), Field Programmable Gate Array (FPGA), controller, microcontroller, microprocessor or other electronic components for performing the above methods.

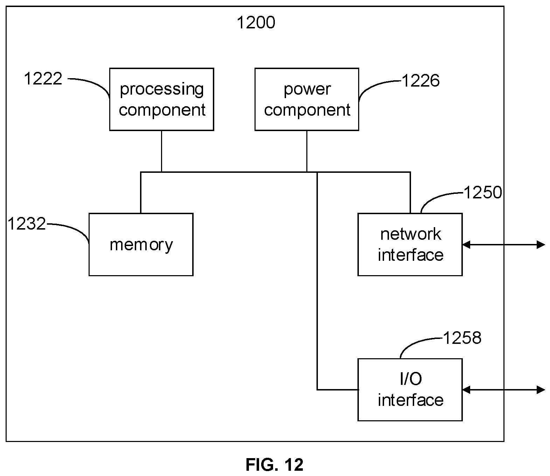

FIG. 12 is a block diagram illustrating a base station 1200 according to an embodiment of the application. For example, the base station 1200 may be one base station. As illustrated in FIG. 12, the base station 1200 includes a processing component 1222, which further includes at least one processor, and a memory resource represented by a memory 1232 for storing instructions executable by the processing component 1222, such as an application program. The application program stored in the memory 1232 may include one or more modules each corresponding to a set of instructions. In addition, the processing component 1222 is configured to execute instructions, so as to execute any of the aforementioned methods performed by the base station, for example, the methods shown in FIG. 1.

The base station 1200 may also include a power component 1226 configured to perform power management of the base station 1200, a wired or wireless network interface 1250 configured to connect the base station 1200 to a network, and an input-output (I/O) interface 1258. The base station 1200 may operate based on an operating system stored in the memory 1232, such as Windows Server^{™}, Mac OS X^{™}, Unix^{™}, Linux^{™}, Free BSD^{™} or the like.

Other embodiments of the disclosure will be readily apparent to those skilled in the art from consideration of the specification and practice of the disclosure described herein. The disclosure is intended to cover any modification, use or adaptation of the disclosure. These modifications, uses or adaptations follow the general principles of the disclosure and include common knowledge or conventional technical means in the technical field not disclosed in this disclosure. The specification and embodiments are to be considered examples only, with a true scope and spirit of the disclosure being indicated by the following claims.

It is understandable that the disclosure is not limited to the precise constructions which have been described above and shown in the drawings, and various modifications and changes may be made without departing from the scope thereof. The scope of the disclosure is limited only by the appended claims.

## Claims

1. A method for reporting a power headroom report (PHR), performed by a user equipment (UE), comprising:
receiving configuration information sent by a base station, the configuration information being used for instructing the UE to support, on one carrier, a PHR reporting for one single transmission reception point (TRP);
receiving, from the base station, power control parameters corresponding to at least one carrier that support one or more TRPs;
receiving, from the base station, a PHR reporting trigger condition corresponding to the one or more TRPs; and
triggering the PHR reporting for a respective TRP corresponding to each carrier based on the power control parameters and the reporting trigger condition.

2. The method of claim 1, wherein each power control parameter comprises at least one of:
first information corresponding to a TRP on a carrier; or
second information corresponding to a carrier.

3. The method of claim 2, wherein the first information corresponding to the TRP on the carrier comprises at least one of:
identifier information corresponding to the TRP on the carrier;
identifier information of a downlink path loss reference carrier corresponding to the TRP on the carrier;
a downlink path loss change value corresponding to the TRP on the carrier;
an uplink power back-off change value corresponding to the TRP on the carrier;
a PHR-periodic timer corresponding to the TRP on the carrier;
a PHR-prohibit timer corresponding to the TRP on the carrier;
a maximum permissible exposure (MPE) power threshold corresponding to the TRP on the carrier;
an MPE-prohibit timer corresponding to the TRP on the carrier;
an uplink MPE power back-off change value corresponding to the TRP on the carrier; or
an MPE millimeter wave frequency range 2 (FR2) reporting corresponding to the TRP on the carrier.

4. The method of claim 3, wherein the identifier information corresponding to the TRP on the carrier comprises at least one of:
an identifier of an uplink physical channel of the TRP on the carrier;
a beam information identifier of the TRP on the carrier;
a sounding reference signal (SRS) resource set identifier of the TRP on the carrier; or
a power control parameter set identifier of the TRP on the carrier.

5. The method of claim 4, wherein the uplink physical channel comprises at least one of:
a physical uplink control channel (PUCCH);
a physical uplink shared channel (PUSCH);
an SRS; or
a physical random access channel (PRACH).

6. The method of claim 3, wherein the second information corresponding to the carrier comprises at least one of:
identifier information of a downlink path loss reference carrier corresponding to the carrier;
a downlink path loss change value corresponding to the carrier;
an uplink power back-off change value corresponding to the carrier;
a PHR-periodic timer corresponding to the carrier;
a PHR-prohibit timer corresponding to the carrier;
an MPE power threshold corresponding to the carrier;
an MPE-prohibit timer corresponding to the carrier;
an uplink MPE power back-off change value corresponding to the carrier; or
an MPE FR2 reporting corresponding to the carrier.

7. The method of claim 1, wherein the reporting trigger condition comprises at least one of:
a change in identifier information corresponding to a TRP on a carrier;
a change in a downlink path loss reference carrier corresponding to a TRP on a carrier;
a change in a sending carrier of an uplink physical channel of a TRP on a carrier;
a PHR-periodic timer corresponding to a TRP on a carrier expiring;
a PHR-prohibit timer corresponding to a TRP on a carrier expiring and an actual downlink path loss change value corresponding to the TRP exceeding a downlink path loss change value corresponding to the TRP on the carrier included in the power control parameter;
a PHR-prohibit timer corresponding to a TRP on a carrier expiring and an actual uplink power back-off change value corresponding to the TRP exceeding an uplink power back-off change value of the TRP on the carrier included in the power control parameter;
a PHR-prohibit timer corresponding to a TRP on a carrier expiring and an actual downlink path loss change value corresponding to the TRP exceeding a downlink path loss change value corresponding to the carrier included in the power control parameter;
a PHR-prohibit timer corresponding to a TRP on a carrier expiring and an actual uplink power back-off change value corresponding to the TRP exceeding an uplink power back-off change value corresponding to the carrier included in the power control parameter;
a PHR-periodic timer corresponding to a carrier expiring;
a PHR-prohibit timer corresponding to a carrier expiring and an actual downlink path loss change value corresponding to a TRP exceeding a downlink path loss change value corresponding to the TRP on the carrier included in the power control parameter;
a PHR-prohibit timer corresponding to a carrier expiring and an actual uplink power back-off change value corresponding to a TRP exceeding an uplink power back-off change value corresponding to the TRP on the carrier included in the power control parameter;
a PHR-prohibit timer corresponding to a carrier expiring and an actual downlink path loss change value corresponding to a TRP exceeding a downlink path loss change value corresponding to the carrier included in the power control parameter;
a PHR-prohibit timer corresponding to a carrier expiring and an actual uplink power back-off change value corresponding to a TRP exceeding an uplink power back-off change value corresponding to the carrier included in the power control parameter;
a change in a downlink path loss reference carrier corresponding to a carrier;
configuring a maximum permissible exposure (MPE) frequency range 2 (FR2) reporting corresponding to a TRP on a carrier, and an MPE power back-off change value corresponding to the TRP exceeding an MPE power threshold corresponding to the TRP on the carrier included in the power control parameter;
configuring an MPE FR2 reporting corresponding to a TRP on a carrier, and an MPE power back-off change value corresponding to the TRP exceeding an uplink MPE power back-off change value corresponding to the TRP on the carrier included in the power control parameter;
configuring an MPE FR2 reporting corresponding to a TRP on a carrier, and an MPE power back-off change value corresponding to the TRP exceeding an MPE power threshold corresponding to the carrier included in the power control parameter;
configuring an MPE FR2 reporting corresponding to a TRP on a carrier, and an MPE power back-off change value corresponding to the TRP exceeding an uplink MPE power back-off change value corresponding to the carrier included in the power control parameter;
configuring an MPE FR2 reporting corresponding to a carrier, and an MPE power back-off change value corresponding to a TRP exceeding an MPE power threshold corresponding to the TRP on the carrier included in the power control parameter;
configuring an MPE FR2 reporting corresponding to a carrier, and an MPE power back-off change value corresponding to a TRP exceeding an uplink MPE power back-off change value corresponding to the TRP on the carrier included in the power control parameter;
configuring an MPE FR2 reporting corresponding to a carrier, and an MPE power back-off change value corresponding to a TRP exceeding an MPE power threshold corresponding to the carrier included in the power control parameter;
configuring an MPE FR2 reporting corresponding to a carrier, and an MPE power back-off change value corresponding to a TRP exceeding an uplink MPE power back-off change value corresponding to the carrier included in the power control parameter;
an MPE-prohibit timer corresponding to a TRP on a carrier expiring; or
an MPE-prohibit timer corresponding to a carrier expiring.

8. The method of claim 1, wherein triggering the PHR reporting for a respective TRP corresponding to each carrier based on the power control parameters and the reporting trigger condition comprises:
for each carrier, selecting one TRP on the carrier in response to determining, based on the power control parameters and the reporting trigger condition, that the UE satisfies the reporting trigger condition; and
reporting the PHR of the TRP to the base station.

9. The method of claim 8, wherein selecting one TRP on the carrier comprises at least one of:
selecting the TRP on the carrier based on a predefined selection rule;
selecting the TRP on the carrier based on a selection rule configured or indicated by a network; or
autonomously selecting the TRP on the carrier.

10. The method of claim 9, wherein the selection rule comprises:
Rule 1: selecting a TRP corresponding to a predefined transmission opportunity on the carrier as the one TPR; or
Rule 2: determining a TRP on the carrier as the one TRP by default.

11. The method of claim 8, wherein triggering the PHR reporting for a respective TRP corresponding to each carrier comprises at least one of:
for each carrier, reporting a maximum power that can be sent by one TRP on the carrier after a power back-off, in response to the carrier being configured with the power back-off;
for each carrier, reporting a power headroom of one TRP after a real physical uplink shared channel (PUSCH) is sent, in response to the carrier being configured with a PUSCH and there is a real PUSCH transmission at the UE;
for each carrier, reporting a power headroom of one TRP after a reference PUSCH is sent, in response to the carrier being configured with a PUSCH and there is a real PUSCH transmission at the UE;
for each carrier, reporting a power headroom of one TRP after a reference PUSCH is sent, in response to the carrier being configured with a PUSCH and there is no real PUSCH transmission at the UE;
for each carrier, reporting a power headroom of one TRP after a real physical uplink control channel (PUCCH) is sent, in response to the carrier being configured with a PUCCH and there is a real PUCCH transmission at the UE;
for each carrier, reporting a power headroom of one TRP after a reference PUCCH is sent, in response to the carrier being configured with a PUCCH and there is a real PUCCH transmission at the UE;
for each carrier, reporting a power headroom of one TRP after a reference PUCCH is sent, in response to the carrier being configured with a PUCCH and there is no real PUCCH transmission at the UE;
for each carrier, reporting a power headroom of one TRP after a real Sounding reference signal (SRS) is sent, in response to the carrier being configured with an SRS and there is a real SRS transmission at the UE;
for each carrier, reporting a power headroom of one TRP after a reference SRS is sent, in response to the carrier being configured with an SRS and there is a real SRS transmission at the UE;
for each carrier, reporting a power headroom of one TRP after a reference SRS is sent, in response to the carrier being configured with an SRS and there is no real SRS transmission at the UE;
for each carrier, reporting a power headroom of one TRP after a real physical random access channel (PRACH) is sent, in response to the carrier being configured with a PRACH and there is a real PRACH transmission at the UE;
for each carrier, reporting a power headroom of one TRP after a reference PRACH is sent, in response to the carrier being configured with a PRACH and there is a real PRACH transmission at the UE;
for each carrier, reporting a power headroom of one TRP after a reference PRACH is sent, in response to the carrier being configured with a PRACH and there is no real PRACH transmission at the UE; or
reporting a power back-off value of the UE.

12. The method of claim 11, wherein triggering the PHR reporting for a respective TRP corresponding to each carrier further comprises:
reporting an identifier of the respective TRP.

13. A method for reporting a power headroom report (PHR), performed by a base station, comprising:
sending configuration information to a user equipment (UE), the configuration information being used for instructing the UE to support, on one carrier, a PHR reporting for one single transmission reception point (TRP);
sending power control parameters corresponding to at least one carrier that support one or more TRPs to the UE;
sending a PHR reporting trigger condition corresponding to the one or more TRPs to the UE; and
receiving, from the UE, a PHR reporting of a respective TRP corresponding to each carrier.

14. The method of claim 13, wherein each power control parameter comprises at least one of:
first information corresponding to a TRP on a carrier; or
second information corresponding to a carrier.

15. The method of claim 14, wherein the first information corresponding to the TRP on the carrier comprises at least one of:
identifier information corresponding to the TRP on the carrier;
identifier information of a downlink path loss reference carrier corresponding to the TRP on the carrier;
a downlink path loss change value corresponding to the TRP on the carrier;
an uplink power back-off change value corresponding to the TRP on the carrier;
a PHR-periodic timer corresponding to the TRP on the carrier;
a PHR-prohibit timer corresponding to the TRP on the carrier;
a maximum permissible exposure (MPE) power threshold corresponding to the TRP on the carrier;
an MPE-prohibit timer corresponding to the TRP on the carrier;
an uplink MPE power back-off change value corresponding to the TRP on the carrier; or
an MPE millimeter wave frequency range 2 (FR2) reporting corresponding to the TRP on the carrier.

16. The method of claim 15, wherein the identifier information corresponding to the TRP on the carrier comprises at least one of:
an identifier of an uplink physical channel of the TRP on the carrier;
a beam information identifier of the TRP on the carrier;
a sounding reference signal (SRS) resource set identifier of the TRP on the carrier; or
a power control parameter set identifier of the TRP on the carrier.

17. The method of claim 16, wherein the uplink physical channel comprises at least one of:
a physical uplink control channel (PUCCH);
a physical uplink shared channel (PUSCH);
an SRS; or
a physical random access channel (PRACH).

18. The method of claim 15, wherein the second information corresponding to the carrier comprises at least one of:
identifier information of a downlink path loss reference carrier corresponding to the carrier;
a downlink path loss change value corresponding to the carrier;
an uplink power back-off change value corresponding to the carrier;
a PHR-periodic timer corresponding to the carrier;
a PHR-prohibit timer corresponding to the carrier;
an MPE power threshold corresponding to the carrier;
an MPE-prohibit timer corresponding to the carrier;
an uplink MPE power back-off change value corresponding to the carrier; or
an MPE FR2 reporting corresponding to the carrier.

19. The method of claim 13, wherein the reporting trigger condition comprises at least one of:
a change in identifier information corresponding to a TRP on a carrier;
a change in a downlink path loss reference carrier corresponding to a TRP on a carrier;
a change in a sending carrier of an uplink physical channel of a TRP on a carrier;
a PHR-periodic timer corresponding to a TRP on a carrier expiring;
a PHR-prohibit timer corresponding to a TRP on a carrier expiring and an actual downlink path loss change value corresponding to the TRP exceeding a downlink path loss change value corresponding to the TRP on the carrier included in the power control parameter;
a PHR-prohibit timer corresponding to a TRP on a carrier expiring and an actual uplink power back-off change value corresponding to the TRP exceeding an uplink power back-off change value of the TRP on the carrier included in the power control parameter;
a PHR-prohibit timer corresponding to a TRP on a carrier expiring and an actual downlink path loss change value corresponding to the TRP exceeding a downlink path loss change value corresponding to the carrier included in the power control parameter;
a PHR-prohibit timer corresponding to a TRP on a carrier expiring and an actual uplink power back-off change value corresponding to the TRP exceeding an uplink power back-off change value corresponding to the carrier included in the power control parameter;
a PHR-periodic timer corresponding to a carrier expiring;
a PHR-prohibit timer corresponding to a carrier expiring and an actual downlink path loss change value corresponding to a TRP exceeding a downlink path loss change value corresponding to the TRP on the carrier included in the power control parameter;
a PHR-prohibit timer corresponding to a carrier expiring and an actual uplink power back-off change value corresponding to a TRP exceeding an uplink power back-off change value corresponding to the TRP on the carrier included in the power control parameter;
a PHR-prohibit timer corresponding to a carrier expiring and an actual downlink path loss change value corresponding to a TRP exceeding a downlink path loss change value corresponding to the carrier included in the power control parameter;
a PHR-prohibit timer corresponding to a carrier expiring and an actual uplink power back-off change value corresponding to a TRP exceeding an uplink power back-off change value corresponding to the carrier included in the power control parameter;
a change in a downlink path loss reference carrier corresponding to a carrier;
configuring a MPE FR2 reporting corresponding to a TRP on a carrier, and the MPE power back-off change value corresponding to the TRP exceeding an MPE power threshold corresponding to the TRP on the carrier included in the power control parameter;
configuring an MPE FR2 reporting corresponding to a TRP on a carrier, and an MPE power back-off change value corresponding to the TRP exceeding an uplink MPE power back-off change value corresponding to the TRP on the carrier included in the power control parameter;
configuring an MPE FR2 reporting corresponding to a TRP on a carrier, and an MPE power back-off change value corresponding to the TRP exceeding an MPE power threshold corresponding to the carrier included in the power control parameter;
configuring an MPE FR2 reporting corresponding to a TRP on a carrier, and an MPE power back-off change value corresponding to the TRP exceeding an uplink MPE power back-off change value corresponding to the carrier included in the power control parameter;
configuring an MPE FR2 reporting corresponding to a carrier and an MPE power back-off change value corresponding to a TRP exceeding an MPE power threshold corresponding to the TRP on the carrier included in the power control parameter;
configuring an MPE FR2 reporting corresponding to a carrier and an MPE power back-off change value corresponding to a TRP exceeding an uplink MPE power back-off change value corresponding to the TRP on the carrier included in the power control parameter;
configuring an MPE FR2 reporting corresponding to a carrier, and an MPE power back-off change value corresponding to a TRP exceeding an MPE power threshold corresponding to the carrier included in the power control parameter;
configuring an MPE FR2 reporting corresponding to a carrier, and an MPE power back-off change value corresponding to a TRP exceeding an uplink MPE power back-off change value corresponding to the carrier included in the power control parameter;
an MPE-prohibit timer corresponding to a TRP on a carrier expiring; or
an MPE-prohibit timer corresponding to a carrier expiring.

20. The method of claim 13, further comprising:
configuring or indicating a selection rule for selecting the respective TPR on each carrier to the UE.

21. The method of claim 20, wherein the selection rule comprises:
Rule 1: selecting a TRP corresponding to a predefined transmission opportunity on the carrier as the one TPR; or
Rule 2: determining a TRP on the carrier as the one TRP by default.

22. The method of claim 13, wherein receiving, from the UE, the PHR reporting of the respective TRP corresponding to each carrier comprises at least one of:
for each carrier, receiving a maximum power that can be sent by one TRP on the carrier after a power back-off, in response to the carrier being configured with the power back-off;
for each carrier, receiving a power headroom of one TRP after a real physical uplink shared channel (PUSCH) is sent, in response to the carrier being configured with a PUSCH and there is a real PUSCH transmission at the UE;
for each carrier, receiving a power headroom of one TRP after a reference PUSCH is sent, in response to the carrier being configured with a PUSCH and there is a real PUSCH transmission at the UE;
for each carrier, receiving a power headroom of one TRP after a reference PUSCH is sent, in response to the carrier being configured with a PUSCH and there is no real PUSCH transmission at the UE;
for each carrier, receiving a power headroom of one TRP after a real physical uplink control channel (PUCCH) is sent, in response to the carrier being configured with a PUCCH and there is a real PUCCH transmission at the UE;
for each carrier, receiving a power headroom of one TRP after a reference PUCCH is sent, in response to the carrier being configured with a PUCCH and there is a real PUCCH transmission at the UE;
for each carrier, receiving a power headroom of one TRP after a reference PUCCH is sent, in response to the carrier being configured with a PUCCH and there is no real PUCCH transmission at the UE;
for each carrier, receiving a power headroom of one TRP after a real Sounding reference signal (SRS) is sent, in response to the carrier being configured with an SRS and there is a real SRS transmission at the UE;
for each carrier, receiving a power headroom of one TRP after a reference SRS is sent, in response to the carrier being configured with an SRS and there is a real SRS transmission at the UE;
for each carrier, receiving a power headroom of one TRP after a reference SRS is sent, in response to the carrier being configured with an SRS and there is no real SRS transmission at the UE;
for each carrier, receiving a power headroom of one TRP after a real physical random access channel (PRACH) is sent, in response to the carrier being configured with a PRACH and there is a real PRACH transmission at the UE;
for each carrier, receiving a power headroom of one TRP after a reference PRACH is sent, in response to the carrier being configured with a PRACH and there is a real PRACH transmission at the UE;
for each carrier, receiving a power headroom of one TRP after a reference PRACH is sent, in response to the carrier being configured with a PRACH and there is no real PRACH transmission at the UE; or
receiving a power back-off value of the UE.

23. The method of claim 22, wherein receiving, from the UE, the PHR reporting of the respective TRP corresponding to each carrier further comprises:
receiving an identifier of the respective TRP.

24. A device for reporting a power headroom report (PHR), comprising:
a receiving module, configured to receive configuration information sent by a base station, the configuration information being used for instructing a user equipment (UE) to support, on one carrier, a PHR reporting for one single transmission reception point (TRP);
wherein the receiving module is further configured to receive, from the base station, power control parameters corresponding to at least one carrier that support one or more TRPs;
wherein the receiving module is further configured to receive, from the base station, a PHR reporting trigger condition corresponding to the one or more TRPs; and
wherein the device further comprising a reporting module, configured to trigger the PHR reporting for a respective TRP corresponding to each carrier based on the power control parameters and the reporting trigger condition.

25. A device for reporting a power headroom report (PHR), comprising:
a sending module, configured to send configuration information to a user equipment (UE), the configuration information being used for instructing the UE to support, on one carrier, a PHR reporting for one single transmission reception point (TRP);
wherein the sending module is further configured to send power control parameters corresponding to at least one carrier that support one or more TRPs to the UE;
wherein the sending module is further configured to send a PHR reporting trigger condition corresponding to the one or more TRPs to the UE; and
wherein the device further comprises a receiving module, configured to receive, from the UE, a PHR reporting of a respective TRP corresponding to each carrier.

26. A user equipment (UE), comprising: a transceiver; a memory; and a processor; wherein the processor is connected to the transceiver and the memory, configured to control transmission and reception of a wireless signal of the transceiver and perform the method of any one of claims 1 to 12 by executing computer-executable instructions stored on the memory.

27. Abase station, comprising: a transceiver; a memory; and a processor; wherein the processor is connected to the transceiver and the memory, configured to control transmission and reception of a wireless signal of the transceiver and perform the method of any one of claims 13 to 23 by executing computer-executable instructions stored on the memory.

28. A computer storage medium, having computer-executable instructions stored thereon; wherein after the computer-executable instructions are executed by a processor, the method of any one of claims 1 to 12 or 13 to 26 is performed.
